(19) Europäisches Patentamt
European Patent Office
Office européen des brevets

(11) **EP 3 014 373 B1**

(12) **EUROPÄISCHE PATENTSCHRIFT**

(45) Veröffentlichungstag und Bekanntmachung des Hinweises auf die Patenterteilung:
**04.11.2020   Patentblatt 2020/45**

(21) Anmeldenummer: **14733645.7**

(22) Anmeldetag: **27.06.2014**

(51) Int Cl.:
*G05B 23/02* (2006.01)          *H02P 29/00* (2016.01)
*H02P 31/00* (2006.01)          *H02P 29/60* (2016.01)

(86) Internationale Anmeldenummer:
**PCT/EP2014/063773**

(87) Internationale Veröffentlichungsnummer:
**WO 2014/207242 (31.12.2014 Gazette 2014/53)**

(54) **ANORDNUNG ZUR ABSCHÄTZUNG DER LEBENSDAUER EINES ELEKTROMOTORS**

ASSEMBLY FOR ESTIMATING THE SERVICE LIFE OF AN ELECTRIC MOTOR

SYSTÈME D'ESTIMATION DE LA DURÉE DE VIE D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2013   DE 102013106838**

(43) Veröffentlichungstag der Anmeldung:
**04.05.2016   Patentblatt 2016/18**

(73) Patentinhaber: **ebm-papst St. Georgen GmbH & Co. KG**
**78112 St. Georgen (DE)**

(72) Erfinder:
• **HELLER, Frank**
**78126 Königsfeld-Burgberg (DE)**
• **MOINI, Mojtaba**
**72024 Tübingen (DE)**

(74) Vertreter: **Staeger & Sperling Partnerschaftsgesellschaft mbB Sonnenstraße 19 80331 München (DE)**

(56) Entgegenhaltungen:
**EP-A1- 1 286 456        EP-A1- 2 458 469
EP-A2- 1 049 050        US-A1- 2009 249 128**

EP 3 014 373 B1

**Beschreibung**

Die Erfindung betrifft einen elektronisch kommutierten Motor mit einer Anordnung zur fortlaufenden Ermittlung der voraussichtlich noch verfügbaren Lebensdauer des Motors. Ein solcher Motor kann beispielsweise einen Kleinmotor oder einen Lüfter antreiben. Solche Motoren werden heute fast durchweg als so genannte kollektorlose oder - gleichbedeutend - elektronisch kommutierte Motoren ausgeführt, und auch die vorliegende Erfindung wird bevorzugt bei kollektorlosen Elektromotoren angewendet.

Für solche Elektromotoren ermitteln deren Hersteller durch Versuche eine mittlere Lebensdauer, die in den Katalogen angegeben wird. Z.B. hat lt. Katalog ein Axiallüfter der Anmelderin vom Typ 612NMI bei Lagerung des Rotors mit Kugellagern und bei 40° C eine voraussichtliche Lebenserwartung von 80.000 Stunden. Bei der maximal zulässigen Betriebstemperatur von 65° C beträgt die voraussichtliche Lebenserwartung dagegen nur noch 45.000 Stunden. Dies ist hauptsächlich eine Folge davon, dass mit zunehmender Temperatur die Kugellager eine kürzere Lebensdauer haben. Die Lager sind also üblicherweise das die Lebensdauer begrenzende Bauteil, und die Lebensdauer der Lager hängt maßgeblich von der Temperatur der Lager ab.

Solche Katalogangaben sind zwar eine Hilfe, aber die Temperatur ändert sich z.B. mit den Jahreszeiten und der Sonneneinstrahlung, und sie kann sich auch innerhalb eines Tages ändern.

Wenn ein Lüfter für eine Mobilfunkstation auf einem Berg oder einem Turm verwendet werden soll, wo der Lüfter bei einem Defekt nur mit erheblichen Kosten ausgetauscht werden kann, ist es ökonomisch sinnvoll, einen Lüfter mit einer sehr hohen Lebensdauer zu verwenden und ihn rechtzeitig bei günstigem Wetter zu tauschen, um die Kosten durch einen Ausfall möglichst niedrig zu halten.

Die Kosten für einen neuen Lüfter spielen in den meisten Fällen keine Rolle, aber der Betreiber eines Mobilfunknetzes ist daran interessiert, zu wissen, wie groß die mittlere Lebenserwartung der verwendeten Lüfter voraussichtlich noch sein wird.

Eine genaue Voraussage ist jedoch unmöglich, da ein Lüfter z.B. beim Transport oder der Montage einen Lagerschaden erhalten haben kann und dann eine kürzere Lebensdauer hat. Wie alle Voraussagen sind auch Voraussagen über die Lebensdauer eines Lüfters mit erheblichen Unsicherheiten behaftet, und doch sind sie wertvoll, weil man auch aus dem Verlauf der zu erwartenden Lebensdauer über der Zeit Rückschlüsse auf die Qualität des betreffenden Lüfters und seine voraussichtliche Lebensdauer ziehen kann.

Voraussagen sind schwierig, weil solche Lüfter unter sehr unterschiedlichen Betriebsbedingungen arbeiten müssen, z.B. Hitze oder Kälte, saubere oder schmutzige Luft, Art der Lagerung (Kugel- oder Gleitlager), Art der Lagerschmierung, Art des verwendeten Schmierfetts, Betrieb des Lüfters in einer feuchten oder in einer trockenen Atmosphäre, unterschiedliche Drehzahlen, z.B. schnell bei Hitze im Sommer, und sehr langsam oder sogar im Stillstand im tiefen Winter, staubige oder saubere Luft, etc.

Druckschriftlicher Stand der Technik ist im vorliegenden technischen Gebiet aus den Dokumenten EP 2 458 469 A1, EP 1 286 456 A1, EP 1 049 050 A2 und US 2009/249128 A1 bekannt. Die EP 2 458 469 A1 offenbart einen elektronisch kommutierten Motor mit einer Anordnung zur Ermittlung der voraussichtlich noch verfügbaren Lebensdauer des Motors. Dokument EP 1 286 456 A1 offenbart ein Verfahren und System zum Abschätzen eines Parameters einer elektrischen Maschine, welches über einen Controller erfolgt. Die EP 1 049 050 A2 betrifft ein Zustandsüberwachungssystem für Antriebssysteme, das auf der Basis der Mikrosystemtechnik ausgeführt ist und wesentliche Betriebsparameter kontinuierlich erfasst, entsprechend bestimmter Merkmale auswertet und daraus eine Zustandsdiagnose und Klassifizierung des Antriebssystems durchführt. Dokument US 2009/249128 A1 offenbart ein Diagnosesystem zur Erhöhung der Verlässlichkeit von Komponenten mit Modulen, welche Signale übermitteln, aus denen eine verbleibende Lebenszeit abgeleitet wird.

Es ist deshalb eine Aufgabe der Erfindung, eine neue Anordnung der eingangs genannten Art bereit zu stellen.

Diese Aufgabe wird nach der Erfindung gelöst durch den Gegenstand des Patentanspruchs 1. Dadurch, dass die Betriebsbedingungen eines Elektromotors bei der prognostischen Berechnung der noch zu erwartenden Lebensdauer fortlaufend berücksichtigt werden, kann man auch "Lebensdauerreserven" sichtbar machen, die z.B. dadurch entstehen, dass in der kalten Jahreszeit ein Lüfter nur wenig beansprucht wird, weil er dann mit niedriger Drehzahl laufen kann, falls seine Drehzahl abhängig von der Umgebungstemperatur geregelt wird.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1     ein Übersichtsdiagramm über den grundsätzlichen Aufbau einer erfindungsgemäßen Anordnung,

Fig. 2     eine einfache Schaltung zur Erfassung einer Temperatur im Motor,

Fig. 3     eine schematische Darstellung der Werteerfassung,

Fig. 4     ein Flussdiagramm, welches erläutert, wie die voraussichtliche Lebenserwartung im Betrieb fortlaufend korrigiert wird,

Fig. 5    eine grafische Darstellung zur Erläuterung von Fig. 4,

Fig. 6    eine Darstellung zur Erläuterung des Korrekturwerts Δt,

Fig. 7    zeigt die Ausgabe eines Signals TL1 und TL2, die jeweils Informationen über die Drehzahl und die Lebensdauer enthalten,

Fig. 8    zeigt die Ausgabe eines Signals AL1, das sowohl Information über einen Lüfteralarm als auch über die Lebensdauer enthält,

Fig. 9    zeigt einen Lüfter mit einer erfindungsgemäßen Anordnung, und

Fig. 10   ein Übersichtsdiagramm über ein modifiziertes Ausführungsbeispiel der erfindungsgemäßen Anordnung von Fig. 1.

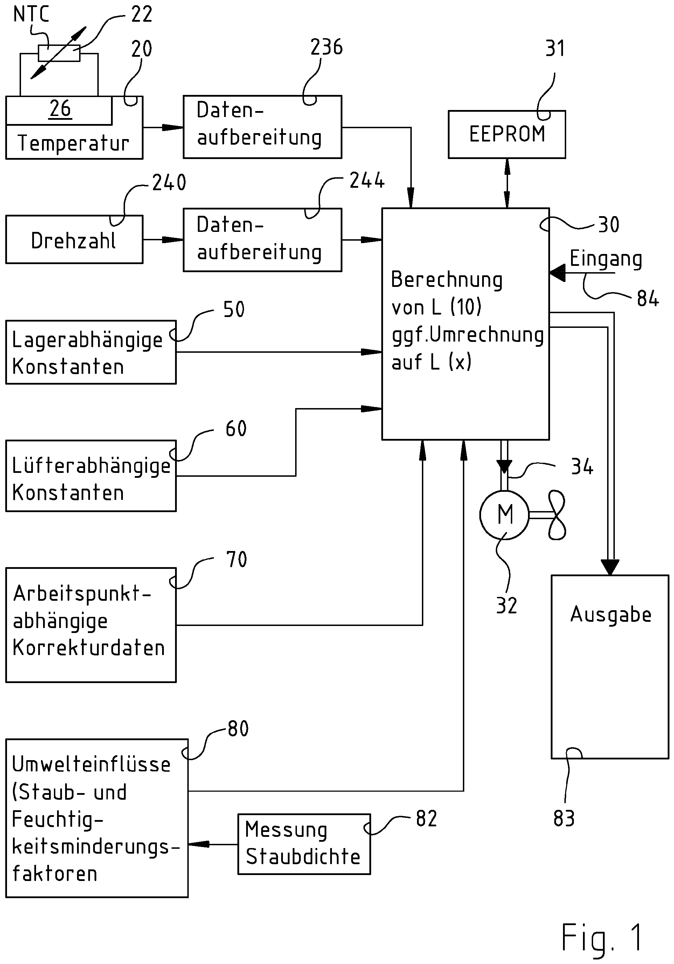

**Fig. 1** zeigt schematisch bevorzugte Komponenten, die in die prognostische Berechnung der verbleibenden Lebensdauer eines Elektromotors eingehen.

In den Katalogen der Hersteller wird gewöhnlich die Größe L10 angegeben, z.B. "L10 = 60.000 Stunden". Das bedeutet, dass bei bestimmten Betriebsbedingungen, z.B. einer Umgebungstemperatur von 40° C, von 100 Lüftern innerhalb einer Zeit von 60.000 Stunden zehn Lüfter ausfallen werden.

Analog bedeutet L1 = 30.000 Stunden, dass bei diesen Betriebsbedingungen innerhalb von 30.000 Stunden von 100 Motoren nur ein Motor ausfallen wird.

Die Werte für L10 lassen sich in Werte für L1 umrechnen, ebenso in umgekehrter Richtung, wobei die Werte für L1 naturgemäß kleiner sind als die Werte für L10.

Für wichtige Antriebe, z.B. die Kühlung einer Telefonstation auf einem Kirchturm oder eine Pumpe in einem medizinischen Gerät, geht man gewöhnlich von L1 aus, und für weniger kritische Antriebe, z.B. für Lüfter in Lüfterbatterien, wo ein rascher Austausch eines defekten Lüfters möglich ist, geht man gewöhnlich von L10 aus, d.h. in diesem Fall werden mehr Ausfälle toleriert. Als Faustregel kann man - ceteris paribus - davon ausgehen, dass sich bei einem Temperaturanstieg von 10 K die Lebensdauer halbiert (K = Kelvin = Maß für die Temperaturänderung).

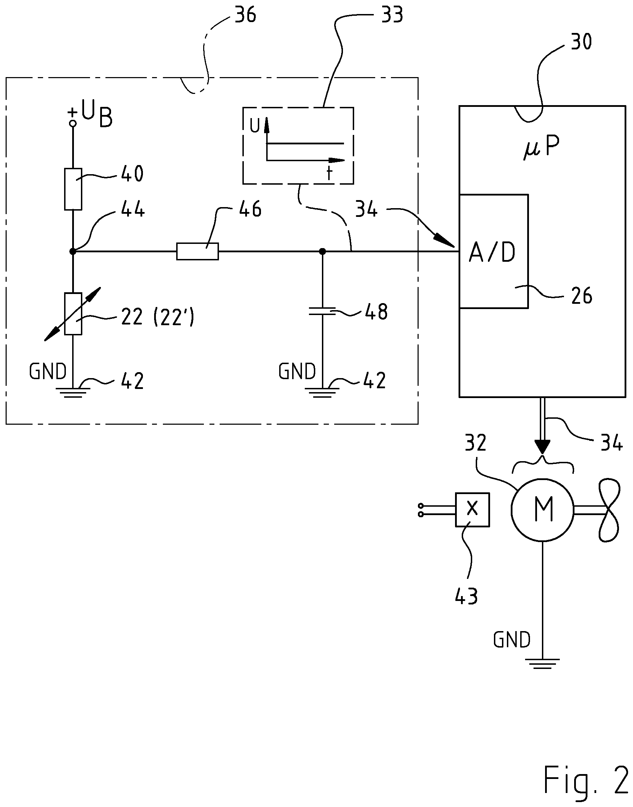

Fig. 1 zeigt bei 20 schematisch die Erfassung einer Temperatur eines überwachten Motors 32 (Fig. 2) mit einem A/D-Wandler 26. Für die Berechnung der verbleibenden Lebensdauer ist hauptsächlich der Verlauf der Temperatur (Temp.) der Lager dieses Motors maßgeblich. Der Verlauf der Motordrehzahl n über der Zeit kann aber auch eine Rolle spielen.

Die Lebensdauer der Lager wird häufig von den Lagerherstellern in Abhängigkeit der Temperatur an den Lagern angegeben. Bei einem von der Anmelderin verwendeten Lagertyp kann beispielhaft die Lebensdauer näherungsweise wie folgt angegeben werden:

Bei einer Lagertemperatur von 32 °C oder weniger beträgt die Lebensdauer X Stunden, wobei X Stunden der maximale Lebensdauer entspricht, z.B. 80.000 Stunden.

Über 32 °C halbiert sich die Lebensdauer pro 30 K. Je größer also die Temperatur an den Lagern ist, desto höher muss der Lebensdauer-Korrekturwert pro vorgegebener Zeitdauer sein. Die Lebensdauer beträgt somit beispielsweise bei 62 °C X/2 Stunden, also der halben maximalen Lebensdauer X, und bei 92 °C X/4 Stunden, also einem Viertel der maximalen Lebensdauer X.

So wird der Lebensdauer-Korrekturwert beispielsweise bei einer Temperatur von 62 °C während einer vorgegebenen zeitlichen Periode gegenüber einer Temperatur von 32 °C während einer vorgegebenen zeitlichen Periode verdoppelt, da quasi mehr von der restlichen Lebensdauer bzw. von den restlichen Lebensdauer-Credits verbraucht wird.

In einem beispielhaften Lüfter kann die Lebensdauer z.B. wie folgt angegeben werden:

$$L10(T\_L) = L10(70°C) * 2^{((70\ °C - T\_L)/20)}$$

Hierbei entspricht T_L der Temperatur am Lager, und bei einer Temperatur T_L < 30 °C wird T_L = 30 °C angenommen, also ein Mindestverschleiß. Für Temperaturen T_L > 70 °C kann sich eine stärkere Lebenszeitverkürzung ergeben, wenn z.B. das verwendete Lagerfett ab dieser Temperatur nicht hitzebeständig ist. Der Wert L10(70 °C) kann z.B. aus Angaben des Lagerherstellers ermittelt werden, wobei er üblicherweise vom verwendeten Lagerfett, von der gewählten Verspannung der Lager und von der maximal zu erwartenden Unwucht des Rotors abhängt.

Aus der Formel ergibt sich z.B.

$$L10(30\ °C) = L10(70\ °C) * 2^2 = 4 * L10(70\ °C)$$

$$L10(50\ °C) = L10(70\ °C) * 2^1 = 2 * L10(70\ °C)$$

Entsprechend muss dann der Lebensdauer-Korrekturwert bei kleineren Temperaturen kleiner und bei größeren Temperaturen größer gewählt werden, um die verbleibende Lebensdauer anzupassen bzw. zu ermitteln.

Bevorzugt wird der Lebensdauer-Korrekturwert nach der Ermittlung überprüft, so dass er größer als ein minimaler Lebensdauer-Korrekturwert und kleiner als ein maximaler Lebensdauer-Korrekturwert ist, also in vorgegebenen Grenzen ist. Dies vermeidet, dass bei der Berechnung des Lebensdauer-Korrekturwerts unrealistische Werte herauskommen.

Ein kollektorloser Motor hat gewöhnlich eine Leiterplatte, die in Fig. 2 schematisch bei 36 angedeutet ist, und da die Messung im Motor (Stator) selbst für die meisten Anwendungen zu hohe Kosten verursachen würde, wird bei 20 gewöhnlich die Temperatur eines NTC-Widerstands 22 auf der Leiterplatte 36 gemessen, alternativ - bei einem Lüfter - die Temperatur im Luftstrom des Lüfters, ebenfalls mit einem NTC-Widerstand 22'. Es können aber auch andere Temperatursensoren 22, 22' verwendet werden, z.B. Kaltleiter (z.B. Platin-Messwiderstände) oder integrierte Halbleiter-Temperatursensoren.

Aus diesen gemessenen Werten kann mit Hilfe einer vorgegebenen Zuordnung bzw. Funktion, beispielsweise in Form einer Korrekturtabelle oder einer mathematischen Formel, eine genäherte Temperatur in den Lagern ermittelt werden. Dies kann wie folgt ausgedrückt werden:

$$T\_L = f(T\_S, n),$$

wobei $T\_L$ die näherungsweise ermittelte Temperatur am Lager, $T\_S$ die Temperatur am Sensor und $n$ die Drehzahl ist. Die Funktion $f$ kann entweder eine mathematische Formel sein, oder aber es kann aus einer Korrekturtabelle KT ausgelesen werden, welcher Wert $T\_L$ zu den ermittelten/gemessenen Werten $T\_S$, $n$ gehört. Je nach Motortyp kann es erforderlich sein, die Lagertemperatur $T\_L$ durch weitere Parameter abzuschätzen, damit diese gut mit der tatsächlichen Lagertemperatur übereinstimmt. Hierdurch ergibt sich z.B. ein Zusammenhang

$$T\_L = f(T\_S, n, I, U),$$

wobei $I$ der durch den Motor fließende Strom und $U$ die Spannung am Motor ist, die üblicherweise als Zwischenkreisspannung bezeichnet wird. Dies wird unten näher erläutert.

Für die Lebensdauer ergibt sich in diesem Fall

$$L10(T\_L) = f(T\_L) = f(T\_S, n, I, U)$$

Es hat sich in Versuchen gezeigt, dass insbesondere bei leistungsstarken Elektromotoren, welche z.B. elektrische Leistungen von 50 W haben, die Temperatur, die im Bereich der dem Motor zugeordneten Leiterplatte 36 gemessen wird, deutlich von der Temperatur an den Lagern abweichen kann, da auf Grund der großen Leistung und der großen Ströme (z.B. 3 A) in der Wicklungsanordnung (trotz des niedrigen Ohmschen Widerstands) des Elektromotors lokal an der Stelle der Lager eine höhere Temperatur entstehen kann. Die gemessene Temperatur charakterisiert zwar eine Temperatur des Elektromotors, es können jedoch in unterschiedlichen Bereichen des Elektromotors unterschiedliche Temperaturen auftreten. Weitere Versuche haben ergeben, dass die Temperatur der Lager, sofern sie nicht direkt gemessen werden kann, näherungsweise abhängig ist von der an der Leiterplatte gemessenen Temperatur und von der Drehzahl des Elektromotors, da eine höhere Drehzahl des Elektromotors eine höhere Motorleistung erfordert, wodurch auch mehr Wärme im Bereich der Lager entsteht. Zudem entsteht bei einer höheren Drehzahl durch die Reibung im Kugellager eine Erwärmung, die zu einer zusätzlichen Temperaturerhöhung führt. Daher kann unter Laborbedingungen eine Messung erfolgen, bei der verschiedene Außentemperaturen eingestellt werden, und bei jeder vorgegebenen Außentemperatur jeweils unterschiedliche Drehzahlen eingestellt und die Temperatur am Temperatursensor sowie die Temperaturen an den Lagern gemessen werden. Hierdurch ergibt sich ein Näherungswert für die Temperatur an den Lagern in Abhängigkeit von der durch den Temperatursensor gemessenen Temperaturwert und der Drehzahl, und dieser Näherungswert kann näherungsweise für jeden Elektromotor verwendet werden, der mit dem unter Laborbedingungen vermessenen Elektromotor baugleich ist. Als Ergebnis können beispielsweise folgende Zuordnungen (Auszug aus dem Kennlinienfeld) erzeugt werden:

T_Lager (T_Sensor = 40 °C, n = 2.000 min$^{-1}$) = 42 °C
T_Lager (T_Sensor = 40 °C, n = 4.000 min$^{-1}$) = 45 °C
T_Lager (T_Sensor = 40 °C, n = 6.000 min$^{-1}$) = 51 °C

T_Lager (T_Sensor = 60 °C, n = 2.000 min$^{-1}$) = 62 °C
T_Lager (T_Sensor = 60 °C, n = 4.000 min$^{-1}$) = 67 °C
T_Lager (T_Sensor = 60 °C, n = 6.000 min$^{-1}$) = 72 °C

Hierbei entspricht T_Lager der Temperatur am Lager, welche abhängig ist von T_Sensor, der vom Temperatursensor 22, 22' gemessenen Temperatur und von der Drehzahl n.

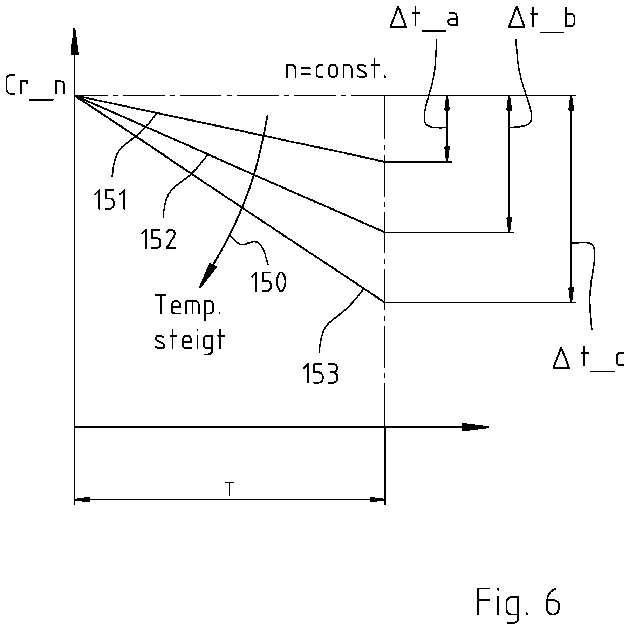

Eine solche Messung unter Laborbedingungen ist auch vorteilhaft, um weitere Effekte zu berücksichtigen. So entsteht bei vielen Elektromotoren im Betrieb eine Luftströmung durch das Innere des Rotors, beispielsweise in Fig. 6 durch das Lagerrohr 184, durch den Bereich zwischen dem Rotor 171 und dem Stator 176 zum offenen Ende des Rotortopfs 174 oder umgekehrt. Der Effekt ist beispielsweise in der Offenlegungsschrift WO 2012/130405 A1 für eine Luftströmung zwischen dem offenen Ende des Lüfterrads und Öffnungen im Lüfterrad ausführlich beschrieben, und hierauf wird Bezug genommen. Diese Luftströmung kann sich in Abhängigkeit vom Arbeitspunkt umdrehen und damit bei bestimmten Arbeitspunkten auch ganz entfallen, wodurch dort eine schlechtere Kühlung im Motor erfolgt. Durch die Messung der Lagertemperatur in Abhängigkeit von der Temperatur am Temperatursensor und der Drehzahl werden solche kritischen Arbeitspunkte ermittelt und der Lebensdauer-Korrekturwert entsprechend erhöht. Es ist auch möglich, die dem Elektromotor zugeordnete Leiterplatte außerhalb des Elektromotor-Gehäuses anzuordnen, so dass der Temperatursensor im Wesentlichen die UmgebungsTemperatur misst. In diesem Fall wird der Einfluss der Drehzahl auf die Lagertemperatur noch größer

Die Messergebnisse können als Kennlinienfeld (zweidimensionales oder mehrdimensionales Feld mit Zuordnungswerten) im Elektromotor gespeichert werden, um aus der jeweils vom Temperatursensor gemessenen Kennlinienfeld einen Näherungswert für die Temperatur der Lager zu ermitteln, oder aber es kann eine Näherungsformel erzeugt werden, mittels der die Temperatur an den Lagern näherungsweise berechnet bzw. ermittelt werden kann. Wenn die drehzahlabhängige Erhöhung der Temperatur an den Lagern im gewünschten Arbeitsbereich weitgehend unabhängig von der aktuellen Temperatur ist, kann auch ein Temperaturkorrekturwert angenommen werden, der abhängig von der Drehzahl aber nicht abhängig von der durch den Temperatursensor gemessenen Temperatur ist, und dieser Temperaturkorrekturwert wird dann zur durch den Temperatursensor gemessenen Temperatur addiert, um einen Näherungswert für die Temperatur an den Lagern zu ermitteln.

Die Erläuterungen zeigen, dass es keinen allgemeinen Zusammenhang zwischen der Lebensdauer des Lüfters und den gemessenen Werten T, n etc. gibt, sondern dass diese Korrelation für jeden Lüftertyp zu ermitteln ist.

Da die Temperatur an den Lagern nur indirekt für die Lebensdauer relevant ist und üblicherweise nicht nach außen übermittelt wird, kann dem Elektromotor auch direkt eine mathematische Formel oder ein Kennlinienfeld zugeordnet werden, aus dem dieser den Lebensdauer-Korrekturwert ermitteln kann. Es ist auch möglich, bei der Berechnung aus einem Kennlinienfeld eine Interpolation zwischen den nächstliegenden vorgegebenen Punkten des Kennlinienfelds durchzuführen.

Im Ergebnis erhält man so den Lebensdauer-Korrekturwert als Funktion der Temperatur, der Drehzahl und ggf. weiteren Werten bzw. Parametern.

Bei einem Motor mit mehreren Lagern kann als Grundlage für die Ermittlung des Lebensdauer-Korrekturwerts die Temperatur an demjenigen Lager verwendet werden, an dem im Labortest die höchsten Temperaturen gemessen werden, oder es kann eine Mittelung der unterschiedlichen, im Labortest gemessenen Temperaturen an den Lagern erfolgen.

Die Drehzahl kann bevorzugt dazu verwendet werden, bei einem Stillstand des Elektromotors den Lebensdauer-Korrekturwert zu erniedrigen, z.B. auf Null. Bei vielen Lüftern ist dies aber beispielsweise nicht erforderlich, da diese im angeschalteten Zustand immer mit einer Mindestdrehzahl drehen.

Bei der Messung der Temperatur mittels des NTC-Widerstands 22 oder 22' ergibt sich eine nicht lineare Kennlinie zwischen dem Temperatursignal und der Temperatur, und diese kann z. B. in einem Modul 236 mit Hilfe einer Korrekturtabelle oder einer mathematischen Formel linearisiert werden. Dabei werden die analogen Ausgangswerte des NTC-Widerstands 22 oder 22' bzw. das in Abhängigkeit von den Temperatursensoren 22, 22' erzeugte Temperatursignal 33 (Fig. 2) digitalisiert, und den digitalisierten Werten werden Temperaturwerte auf einer linearen Kennlinie zugewiesen, um die Weiterverarbeitung dieser Werte zu vereinfachen.

**Fig. 2** zeigt eine solche Anordnung:
Rechts befindet sich ein Mikroprozessor (μP) 30, der gewöhnlich auch zur Steuerung der Kommutierung des kollektorlosen Motors 32 dient, was durch einen Pfeil 34 angedeutet ist. Diesem ist ein EEPROM 31 (vgl. Fig. 1) oder ein anderer nichtflüchtiger Speicher zugeordnet, der dazu dient, augenblickliche Daten für die verfügbare Lebensdauer zu speichern. An Stelle des μP 30 kann auch eine andere Recheneinrichtung 30 wie z.B. ein ASIC verwendet werden.

Auf der Leiterplatte 36 befindet sich zur Temperaturmessung der NTC-Widerstand 22 (z.B. 47 kOhm), der in Reihe mit einem konstanten Widerstand 40 (z.B. 10 kOhm) zwischen einer konstanten Spannung $U_B$ von z.B. +5 V und Masse 42 angeschlossen ist. Die Verbindung 44 zwischen den Widerständen 22 und 40 ist über ein RC-Glied 46, 48 mit einem Widerstand 46 und einem Kondensator 48 an einen A/D-Anschluss 34 des μP 30 angeschlossen und das Potenzial an der Verbindung 44 bzw. das Temperatursignal 33 wird im $\mu$P 30 über einen A/D-Wandler digitalisiert und anschließend bevorzugt linearisiert. Der Widerstand 46 des RC-Glieds hat z.B. einen Wert von 2,2 kOhm, und der Kondensator 48 einen Wert von z.B. 10 nF.

Die Drehzahl des Motors 32 wird im Modul 240 (Fig. 1) erfasst. Hier ergeben sich verschiedene Möglichkeiten je nach Motortyp. Sofern der Motor einen Rotorstellungssensor hat, z.B. einen Hallsensor 43 oder einen AMR-Sensor (AMR = anisotrop magnetoresistiv), kann das Ausgangssignal dieses Sensors verwendet werden, dessen Frequenz der Drehzahl des Motors 32 proportional ist. Häufig wird auch direkt die Zeitdauer zwischen zwei Wechseln des Ausgangssignals verwendet, die umgekehrt proportional zur Drehzahl ist, da diese Zeitdauer einfach zu messen ist. Falls der Motor 32 ohne Sensor arbeitet, also sensorlos, kann das entsprechende "Hallersatzsignal" des Motors verwendet werden, z.B. in Form der Gegen-EMK des Motors, oder eines digitalisierten Werts des Motorstroms. In einem Modul 244 kann das Drehzahlsignal bevorzugt aufbereitet werden, z.B. durch Linearisierung.

In einem Modul 50 können lagerabhängige Konstanten eingestellt werden. Diese sind bevorzugt hauptsächlich abhängig von der Art des Lagers, also Gleitlager oder Kugellager, vom verwendeten Schmierfett der Lager, von den Eigenschaften der axialen Verspannung der Lager z.B. durch eine Feder oder durch einen magnetischen Zug, und von der radialen Belastung, die sich z.B. aus der Unwucht des Flügelrads eines Lüfters ergibt, und von der Zuordnung der Temperatur des Motors zur Lebensdauer. Diese Werte können im $\mu$P 30 mit den Temperaturwerten vom Temperatursensor 20 verknüpft werden, wenn eine genauere Vorhersage der noch verbleibenden voraussichtlichen Lebenserwartung gewünscht wird.

Im Modul 60 wird bevorzugt mindestens eine lüfterabhängige Konstante eingegeben. Das ist gewöhnlich der Wert L10, z.B. bei 20° C und ggf. einer bestimmten Drehzahl, wie er den Katalogen der Hersteller entnommen werden kann, also z.B. L10 = 60.000 Stunden.

Im Modul 70 können bevorzugt arbeitspunktabhängige Korrekturdaten eingegeben werden, wie sie sich aus Dauerlaufversuchen für den betreffenden Motortyp und deren Auswertung ergeben haben. Für manche Motortypen sind bei den Herstellern umfangreiche Messdaten und sonstige Erfahrungswerte verfügbar, die oft auf jahrelangen Messungen beruhen und daher eine genauere Vorhersage ermöglichen.

Im Modul 80 können bevorzugt Umwelteinflüsse berücksichtigt werden, also hauptsächlich Staub und Feuchtigkeit. Bei sauberer Luft kann eine maximale Lebenserwartung von L10 * 1,0 verwendet werden, und bei stark verschmutzter oder sehr feuchter Luft z.B. nur eine Lebenserwartung von L10 0* 0,7. Diese Faktoren können in manchen Fällen fest eingegeben werden, z.B. bei Verwendung der Lüfter in einer Spinnerei. In anderen Fällen, z.B. bei Fahrzeugen, kann ein Modul 82 verwendet werden, in dem die Staubdichte gemessen wird, so dass man z.B. in einer Wüste mit einer voraussichtlichen Lebenserwartung von L10 * 0,7 arbeitet, dagegen in einer Gegend mit sauberer Luft mit einer Lebenserwartung von L10 * 1,0.

Aus den aufgezählten Werten (Parametern) wird im $\mu$P 30 die noch verfügbare Lebenserwartung berechnet, also z.B. der verbleibende Wert L10 zum gegenwärtigen Zeitpunkt, oder ein kundenspezifischer Wert L(x), z.B. L1 oder L5, oder die noch (theoretisch) verfügbare Zahl von Stunden der Lebensdauer, oder die Zahl der bereits verbrauchten Stunden. Dabei fußt der berechnete Wert bevorzugt auf gemessenen Werten, und er spiegelt daher die voraussichtlich verbleibende Lebenserwartung des betreffenden Motors 32 gut wider. Die berechneten Werte werden in einer Ausgabevorrichtung 83 ausgegeben, z.B. als digitaler Anzeigewert, oder als Signal, das zu einer zentralen Anzeige oder einer zentralen Überwachung übertragen werden kann, um gleichzeitig mehrere Motoren oder Lüfter überwachen zu können.

Eine oder mehrere Leitungen 84 ermöglichen die Eingabe von Signalen zum $\mu$P 30, z.B. ein Drehzahl-Sollwert-Signal oder ein externes Temperatur- oder Feuchtigkeitssignal.

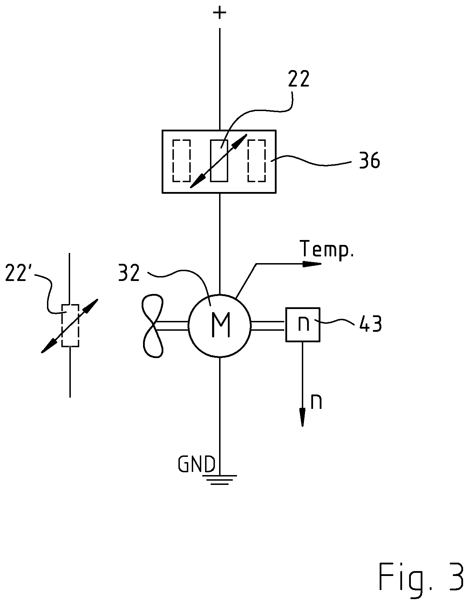

**Fig. 3** zeigt den Motor 32 mit zwei Sensoren 22, 22' zur Messung der Temperatur, wobei die beiden Sensoren 22, 22' je nach gewünschter Genauigkeit alternativ oder kumulativ verwendet werden können. Die Sensoren 22, 22' können jeweils auf einer Leiterplatte 36 angeordnet werden. Ein Signal Temp. 33 (vgl. Fig. 2) wird erzeugt und ausgegeben, und über einen Rotorstellungssensor 43 wird ein Drehzahlsignal erzeugt, dass die Drehzahl des Motors 32 charakterisiert.

**Arbeitsprinzip**

Man geht aus von einem optimalen Arbeitspunkt eines neuen Motors/Lüfters, z.B. Betrieb bei einer konstanten Temperatur von 20° C und einer konstanten Drehzahl von

2.000 U/min, wo die zu erwartende Lebensdauer am größten ist, z.B. 65.000 Stunden.

Zweckmäßig wird dieser Wert mit einem Faktor multipliziert, also z.B. 4 mal 65.000. Man erhält dann sozusagen ein Startguthaben von 260.000 Kreditpunkten, als Angabe über die noch zu erwartende Lebensdauer bei einem vorgegebenen Arbeitspunkt, wobei der vorgegebene Arbeitspunkt bevorzugt einem Arbeitspunkt mit guten Bedingungen entspricht, also beispielsweise mit einer niedrigen Temperatur.

Dieses Startguthaben wird im EEPROM 31 (Fig. 1) oder einem anderen nichtflüchtigen Speicher hinterlegt, also gespeichert. Dies geschieht gewöhnlich beim Hersteller, um Manipulationen am Wert zu der zu erwartenden Lebensdauer zu verhindern.

Im Betrieb werden in vorgegebenen Abständen, (z.B. alle 80 Sekunden = 45 Mal pro Stunde) die Temperatur und die Drehzahl gemessen. Damit wird ein Lebensdauer-Korrekturwert $\Delta t\_n+1$ für den betreffenden Zeitpunkt n+1 berechnet, z.B. $\Delta t = 0,05$ Kreditpunkte bei hoher Temperatur und hoher Drehzahl. Das ist dann der Wert, um den sich der vorhergehende Wert Cr_n innerhalb dieser 80 Sekunden bei diesen speziellen Werten vermindert hat.

Dieser Korrekturwert wird vom Guthaben Cr_n (von der vorhergehenden Messung) abgezogen, so dass man ein reduziertes Guthaben Cr_ n+1 erhält. Nennt man die aufeinander folgenden Guthaben Cr_n und Cr_ n+1, so ergibt sich die Formel

$$Cr\_n+1 = Cr\_n - \Delta t\_n+1 \qquad\qquad ...\ (1)$$

Nach jeder Minderung des Guthabens Cr kann eine Prüfung stattfinden, ob dieses noch genügend groß ist.

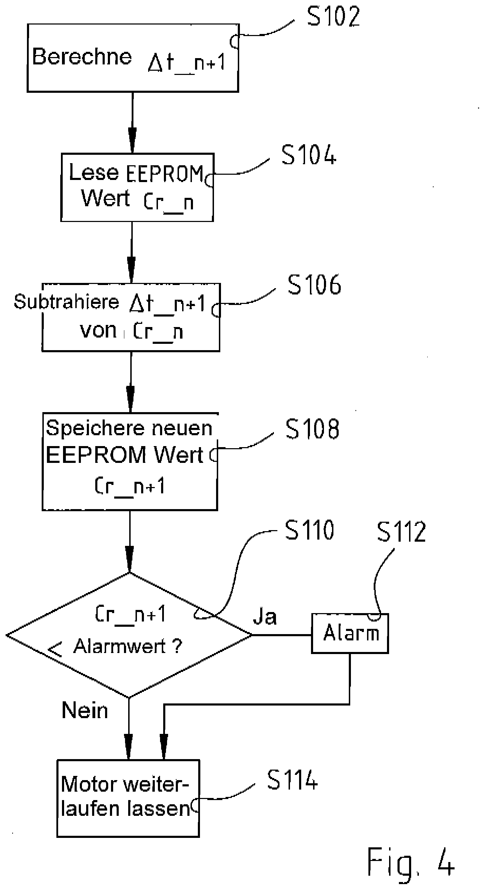

**Fig. 4** zeigt diesen Vorgang in einer für den Fachmann verständlichen Pseudo-Programmiersprache. Im Schritt S102 wird aus den gemessenen Werten, also vor allem Temperatur und Drehzahl des Motors 32, ein Korrekturwert $\Delta t\_$ n+1 berechnet.

Im Schritt S104 wird das augenblickliche Guthaben Cr_n aus dem EEPROM 31 ausgelesen.

Im Schritt S106 wird von diesem Wert Cr_n der berechnete Korrekturwert $\Delta t\_n+1$ abgezogen, und in S108 wird das Resultat, also Cr_ n+1 wieder im EEPROM 31 gespeichert und ersetzt dort den vorhergehenden Wert Cr_n.

Im Schritt S110 wird geprüft, ob das augenblickliche "Guthaben" Cr_n+1 unter ein zulässiges Grenzguthaben gefallen ist, bei dem z.B. ein Alarm (oder ein Voralarm) ausgelöst wird. Falls das der Fall ist, wird bei S112 ein Alarmsignal erzeugt. Falls die Antwort bei S110 Nein lautet, läuft der Motor 32 bei S114 unverändert weiter, und die Messungen werden fortgesetzt, d.h. der Ablauf nach Fig. 4 wiederholt sich ggf. jahrelang in vorgegebenen Zeitabständen T, um ein zeitnahes Bild über die noch verbleibende Lebensdauer des Motors/Lüfters 32 zu erhalten.

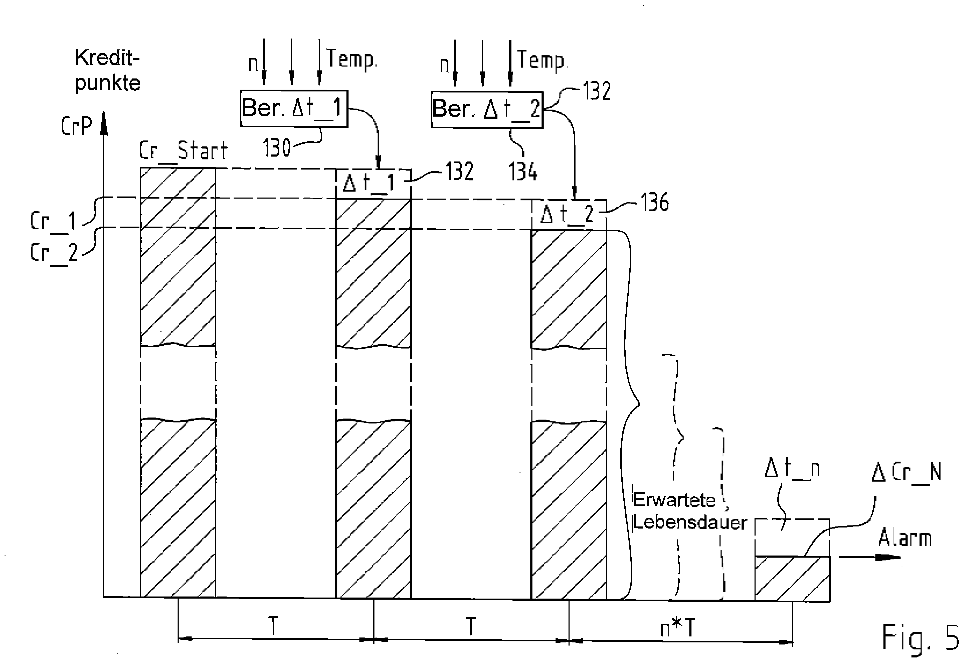

**Fig. 5** zeigt eine erläuternde Schemadarstellung. Die Ordinate CrP zeigt jeweils die Laufzeitreserve, die sich bei laufendem Motor 32 im Laufe der Zeit ständig vermindert, hauptsächlich deshalb, weil die Lager des Motors 32 einer Abnutzung unterliegen, die vor allem eine Funktion der Motordrehzahl n und der Motortemperatur ist.

Diese Laufzeitreserve hat bei einem neuen Motor ihren Höchstwert Cr_Start und kann, wie als Beispiel erläutert, in Kreditpunkten CrP angegeben werden.

Nach dem Einschalten werden während der Zeitspanne T1 Drehzahl n und Temperatur des Motors 32 gemessen, und damit wird bei 130 der Korrekturwert $\Delta t\_1$ berechnet, also die Zeitspanne, um die sich während der Zeit T1 die Laufzeitreserve Cr_Start verringert hat. Deshalb wird bei 132 der Wert $\Delta t\_1$ von Cr_ Start abgezogen, und das Resultat wird bei S108 (Fig. 4) im EEPROM 31 gespeichert.

Nach Ablauf der Zeitspanne T1, die z.B. 80 Sekunden dauern kann, werden erneut Drehzahl n und Temperatur gemessen, und bei 134 wird hieraus der Korrekturwert $\Delta t\_2$ berechnet. Dieser wird anschließend bei 136 von dem im EEPROM 31 gespeicherten Wert Cr_1 abgezogen, so dass man einen neuen, kleineren Wert Cr_2 erhält. Dies bedeutet, dass die erwartete Lebensdauer des Motors 32 kleiner geworden ist.

Am Ende, d.h. vielleicht nach mehreren Jahren, ist der Wert Cr_N im EEPROM klein geworden, so dass schließlich bei dem Test im Schritt S110 der Fig. 4 ein Alarm oder Voralarm ausgelöst wird, um an den Austausch des Motors zu erinnern. Dies geschieht meist zeitlich vor dem berechneten "statistischen" Lebensende des Motors 32, damit ein Austausch problemlos möglich ist.

**Fig. 6** zeigt die Ermittlung von $\Delta t$ bei konstanter Drehzahl und variabler Temperatur.

Wenn die Temperatur niedrig ist, z.B. 25° C, ergibt sich ein niedriger Wert $\Delta t\_a$.

Bei mittelhoher Temperatur, z.B. 55° C, ergibt sich ein höherer Korrekturwert $\Delta t\_b$.

Bei hoher Temperatur des Motors, z.B. 100° C, ergibt sich ein hoher Korrekturwert $\Delta t\_c$.

Naturgemäß ergeben sich innerhalb von 80 Sekunden nur ganz niedrige Korrekturwerte, die zwar ein mathematisches Bild des Verlaufs der verbleibenden Lebensdauer darstellen, aber selbst nur indirekt und mit hohen Kosten messbar wären.

Je nach Applikation kann entweder nur ein Alarmsignal übertragen werden, wenn die berechnete Lebensdauer geringer als eine vorgegebene Lebensdauer ist, oder aber es kann auf Anfrage oder in regelmäßigen zeitlichen Abständen oder beim Vorliegen einer vorgegebenen Bedingung wie Ablauf einer vorgegebenen Teillebensdauer ein Lebensdauer-Signal ausgegeben werden.

Die Übertragung des Lebensdauer-Signals und/oder Alarmsignals vom Motor zu einer Anzeige oder Steuervorrichtung kann leitungsgebunden oder nicht leitungsgebunden, z.B. über eine IR- oder Funk-Verbindung, erfolgen. Letztere Varianten sind vorteilhaft, wenn es umständlich ist, ein Kabel vom Motor zu einer Steuervorrichtung zu legen.

Eine Übertragung des Alarmsignals bzw. Lebensdauer-Signals ist über ein PWM-Signal mit einem Tastverhältnis pwm möglich, z.B.

pwm = 100 % = volle Lebensdauer;

pwm = 7 %: Nur noch 7 % Lebensdauer verfügbar.

Eine Übertragung des Alarmsignals bzw. Lebensdauer-Signals ist auch über ein Signal möglich, bei dem z.B. die Zeitdauer eines High-Signals zwischen zwei Low-Signalen proportional zur verbrauchten oder alternativ zur restlichen Lebensdauer ist, wobei z.B. 1 $\mu$s Zeitdauer des High-Signals einem Tag Lebensdauer entspricht.

Die Übertragung des Alarmsignals bzw. Lebensdauer-Signals kann auch analog erfolgen, entweder als prozentuale Angabe oder als absolute Angabe.

Für eine prozentuale Angabe wird z.B. festgelegt, dass

5 V = volle Lebensdauer, und

1 V = 20 % Lebensdauer

gilt, also eine lineare Zuordnung.

Für eine absolute Angabe wird z.B. festgelegt, dass

5 V = 50.000 h Lebensdauer

0,5 V = 5.000 h Lebensdauer

gilt.

Alternativ kann wie folgt zugeordnet werden:

5 V = mindestens 10.000 h Lebensdauer

2,5 V = 5.000 h Lebensdauer

0,5 V = 1.000 h Lebensdauer

Dies ermöglicht eine hohe Auflösung am Ende der Lebensdauer.

Eine Übertragung ist auch möglich über ein digitales Signal (leitungsgebunden oder nicht leitungsgebunden), wobei für das Alarm-Signal ein einfaches digitales Signal mit High = Alarm und Low = Kein Alarm möglich ist. Beim Lebensdauersignal oder bei der Überwachung mehrerer Motoren ist dagegen eine protokollgebundene Übertragung weiterer Informationen über einen Bus vorteilhaft, z.B. CAN-Bus, LEAN-Bus, IIC-Bus etc, vgl. 83 in Fig. 1.

Bei einem Motor 32 mit einem Steuereingang und einem Ausgang kann bevorzugt über den Steuereingang festgelegt werden, ob der Motor am Ausgang das Lebensdauer-Signal oder das Alarmsignal ausgibt. So kann z.B. bei einem Motor, dem die Solldrehzahl über ein PWM-Tastverhältnis pwm mitgeteilt wird, über eine vorgegebene Sequenz des Tastverhältnisses mitgeteilt werden, ob das Lebensdauer-Signal oder das Alarmsignal ausgegeben werden soll. Wenn z.B. über den Steuereingang für jeweils eine Zeitdauer von 1 s ein PWM-Signal mit einem Tastverhältnis von 70 %, 30 %, 80 %, 20 %, 100 %, 0 % ausgegeben wird, gibt der Motor 32 das Lebensdauer-Signal aus. Wird dagegen z.B. über den Steuereingang für jeweils eine Zeitdauer von 1 s ein PWM-Signal mit einem Tastverhältnis von 70 %, 30 %, 80 %, 20 %, 100 %, 50 % ausgeben, so wird anschließend das Alarmsignal ausgegeben.

Die Anzeige der zu erwartenden Lebensdauer kann analog (z.B. analoger Zeiger) oder digital (z.B. digitales Paneel) erfolgen. Ferner kann am Ende der Lebensdauer die Auflösung der Anzeige erhöht werden, wobei aber stets bedacht werden muss, dass die angezeigten Werte eine hohe Streuung haben und im Einzelfall weit unterschritten oder überschritten werden können.

Um zu verhindern dass Fehler auftreten, falls der Motor 32 während des Vorgangs abgeschaltet wird, in welchem das EEPROM 31 beschrieben wird, wird der berechnete Wert Cr jeweils doppelt abgespeichert, und es werden jeweils auch mehrere vorhergehende Cr-Werte im EEPROM 31 gespeichert, so dass ein fehlender oder falscher Wert einfach rekonstruiert werden kann.

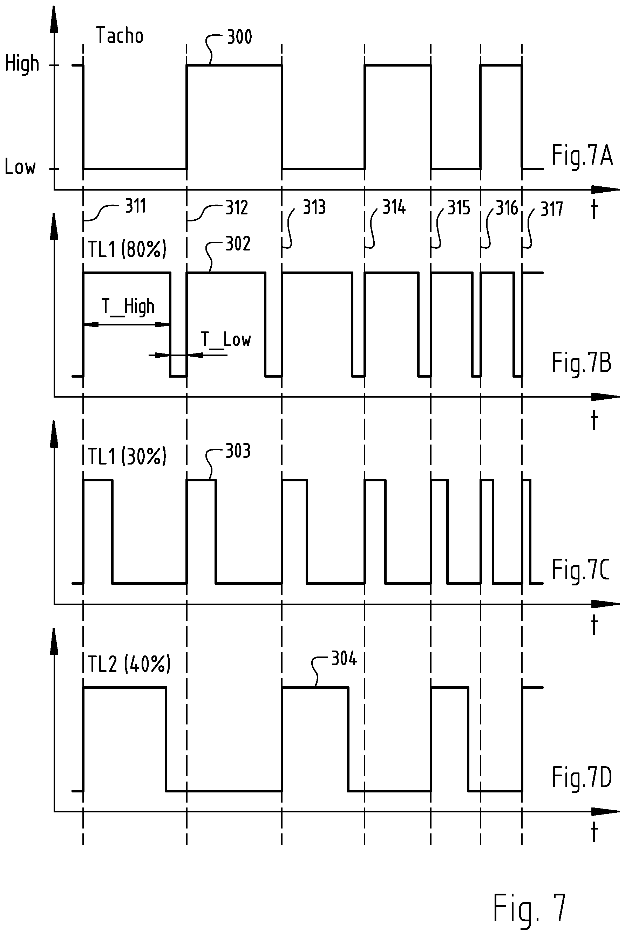

**Fig. 7A** zeigt ein Tacho-Signal 300, dessen Frequenz proportional zur Drehzahl des Motors 32 ist. Hierzu wird bspw. bei einem einphasigen Motor das Signal eines Rotorstellungssensors ausgegeben, oder bei einem dreiphasigen Motor das Signal eines der Rotorstellungssensoren oder eine Kombination der Signale der Rotorstellungssensoren. Das Signal 300 hat in Abhängigkeit von der Anzahl der Rotorpole und der Rotorstellungssensoren beispielsweise vier Wechsel pro Umdrehung oder 12 Wechsel pro Umdrehung. Das Signal 300 hat an den Stellen 311, 312, 313, 314, 315, 316, 317 jeweils einen Wechsel von High nach Low bzw. von Low nach High. Die Frequenz des Signals 300 nimmt über die Zeit t zu, und dies zeigt an, dass gerade eine Beschleunigung erfolgt.

**Fig. 7B** zeigt ein Signal TL1 302, das eine Kombination des Tacho-Signals 300 mit einem Lebensdauer-Signal darstellt. Das Lebensdauer-Signal wird also auf das Signal 300 aufmoduliert.

Beim Signal TL1 302 beträgt die Restlebensdauer 80 %, und daher wird zwischen jedem der Wechsel des Signals 300 an den Stellen 311 bis 317 das Signal 302 von Low auf High gesetzt, und nach ca. 80 % der Zeit zwischen zwei benachbarten Wechseln des Signals 300 an den Stellen 311 bis 317 ändert sich das Signal TL1 302 von High auf Low und bleibt bis zum nächsten Wechsel des Signals 300 auf Low. Die Zeitdauer zwischen den aktuellen Wechseln des Signals 300 kann anhand der vorhergehenden Zeitdauer abgeschätzt werden. So kann z. B. angenommen werden, dass die Zeitdauer zwischen den Wechseln des Signals 300 an den Stellen 312 und 313 in etwas der Zeitdauer zwischen den Zeitpunkten 311 und 312 entspricht. Zumindest beim Erreichen der vorgegebenen Drehzahl funktioniert dieses Verfahren gut.

In **Fig. 7C** ist das Signal TL1 303 für einen Motor mit einer Rest-Lebensdauer von 30 % gezeigt, und das Signal 303 ist entsprechend zwischen zwei der Zeitpunkte 311 bis 317 kürzer im Zustand High als in Fig. 7B.

In gleicher Weise könnte natürlich zwischen jeweils zwei der Zeitpunkte 311 bis 317 erst einmal das Signal 302 bzw. 303 auf Low gesetzt werden und anschließend erst nach High wechseln. Auch kann ein nicht-linearer Zusammenhang zwischen dem Wert für die Lebensdauer und dem Verhältnis der Zeitdauer von High zur Zeitdauer von High und Low gewählt werden, bei dem z.B. eine größere Auflösung im Bereich geringer Lebensdauer gewählt wird.

Bei beiden Signalen 302, 303 kann die Drehzahl des Elektromotors über die Frequenz der Signale 302, 303 ermittelt werden, die der doppelten Frequenz des Signals 300 entspricht. Die Rest-Lebensdauer kann aus dem Verhältnis T_High / T_Low bzw. aus dem Verhältnis T_High / (T_High + T_Low) bzw. T-Low / (T_High + T_Low) ermittelt werden.

**Fig. 7D** zeigt ein Signal TL2, das ebenfalls eine Kombination des Tacho-Signals 300 mit einem Lebensdauer-Signal darstellt. Auch beim Signal TL2 wird die Zeit innerhalb einer Periode, in der das Signal TL2 auf High ist, als Funktion der Rest-Lebensdauer bestimmt. Dabei erstreckt sich jedoch eine Periode jeweils über zwei Wechsel des Signals 300, also hier zwischen 311 und 313, zwischen 313 und 315 und zwischen 315 und 317, also immer zwischen zwei abfallenden Flanken des Signals 300. Dies hat den Vorteil, dass das Signal TL2 304 die gleiche Frequenz wie das Signal 300 hat, so dass ein externes Gerät, das nur die Frequenz eines Tacho-Signals 300 auswertet, auch das Signal 304 auswerten kann.

Zusammengefasst handelt es sich bei Fig. 7 um ein digitales Signal mit einem Wertvorrat, der einen ersten Signalwert (High bzw. Low) und einen zweiten Signalwert (Low bzw. High) umfasst, wobei die Frequenz des Signals proportional zur Drehzahl des Elektromotors ist, und wobei das Verhältnis der Zeitdauer, in der das Signal den ersten Signalwert hat, zur Zeitdauer, in der das Signal den zweiten Signalwert hat, eine Funktion des Lebensdauerwerts ist.

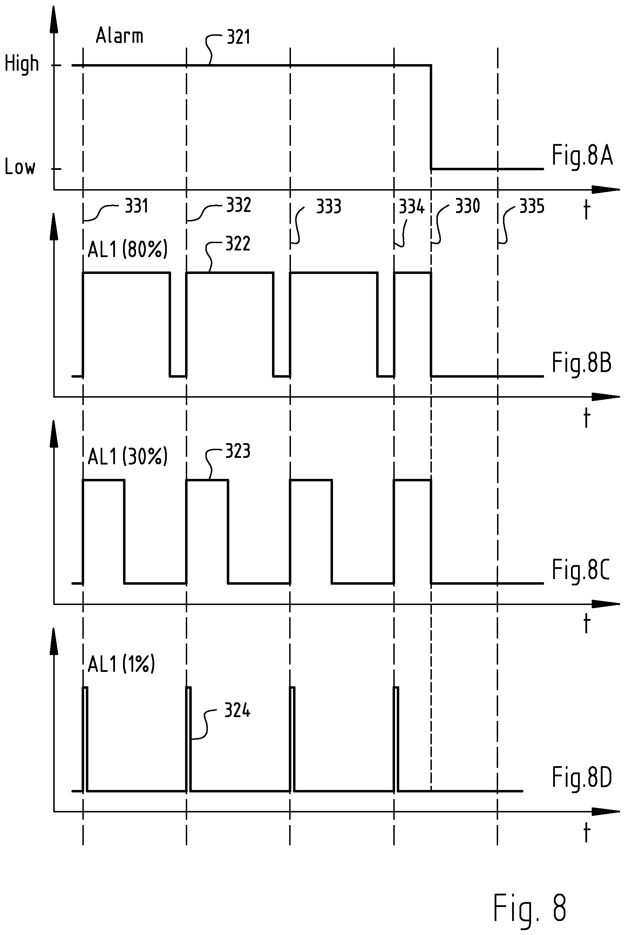

**Fig. 8A** zeigt ein Signal Alarm 321, wie es bei bisherigen Lüftern Verwendung findet. Das Signal Alarm 321 hat den Wert High, solange der Motor keinen Fehler feststellt. Stellt der Motor jedoch einen Fehler fest, also z. B. einen Stillstand des Motors, einen Überstrom oder eine zu geringe Drehzahl, so wechselt das Signal Alarm 321 zu einem Zeitpunkt 330 auf Low, um einem externen Auswertegerät mitzuteilen, dass ein Fehler im Motor vorliegt. Dies kann auch als Normalzustand und Fehlerzustand bezeichnet werden.

**Fig. 8B** zeigt ein Signal AL1 322, bei dem die Rest-Lebensdauer des Motors auf das Signal Alarm 321 aufmoduliert wurde. Hierzu wird der Wert der Rest-Lebensdauer in Form eines PWM-Signals mit fester Frequenz ausgegeben, wobei z. B. das Tastverhältnis dem Wert für die Rest-Lebensdauer entspricht, wobei immer auch nicht-lineare Zuordnungen möglich sind. An der Stelle 330, an der der Elektromotor einen Fehler festgestellt hat, wird das Signal AL1 322 dauerhaft auf Low gesetzt, um einem externen Auswertegerät mitzuteilen, dass ein Fehler im Elektromotor vorliegt.

**Fig. 8C** zeigt das Signal AL1 323 für eine Rest-Lebensdauer von 30 %, und **Fig. 8 D** zeigt ein Signal AL1 324 für eine Rest-Lebensdauer von 1 %, die z. B. bedeutet, dass der Motor bereits so lange gelaufen ist, dass die Wahrscheinlichkeit für einen Ausfall bei 10 % liegt. Das Tastverhältnis des Signals 322, 323, 324 darf jedoch ohne Fehlerfall nicht auf 0 % gesetzt werden, da 0 % einem festgestellten Fehlerfall entspricht.

Zusammengefasst kann man sagen, dass bei dem Signal AL1 aus Fig. 8 in einem ersten Zustand, in dem der Elektromotor keinen Fehler festgestellt hat, dass Signal AL1 mit einer festen Frequenz ausgegeben wird, wobei das Verhältnis der Zeitdauer, in der das Signal den ersten Signalwert hat, zur Zeitdauer, in der das Signal den zweiten Signalwert hat, eine Funktion des Rest-Lebensdauerwerts ist, und wobei in einem zweiten Zustand, in dem der Elektromotor einen Fehler festgestellt hat, das Signal dauerhaft auf Low gesetzt wird, bis bspw. der Elektromotor neu gestartet wird.

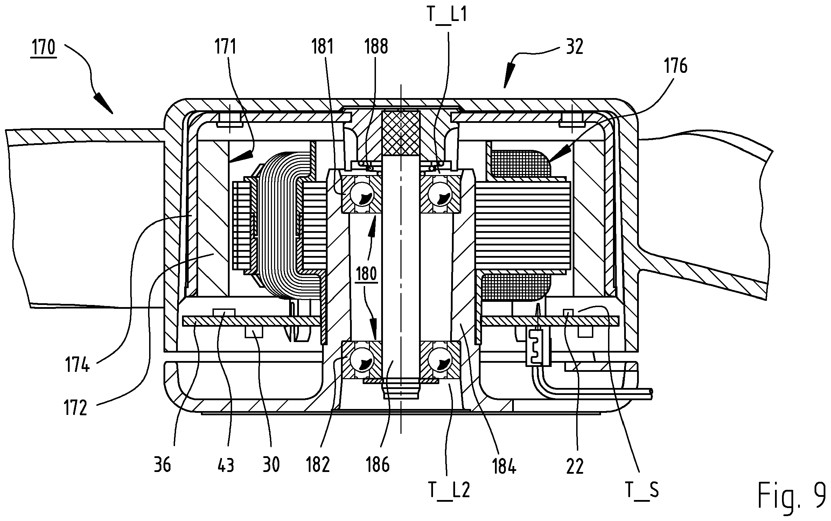

**Fig. 9** zeigt den Aufbau einer bevorzugten Ausführungsform des elektronisch kommutierten Motors 32. Der Motor 32 treibt einen Lüfter mit einem Lüfterrad 170 an.

Der Motor 32 hat einen Rotor 171 und einen Stator 176. Der Rotor 171 hat einen Rotormagneten 172, einen Rotortopf 174 und eine Welle 186. Der Stator 176 hat einen Statorkern und eine Wicklungsanordnung, wobei der im Betrieb durch die Wicklungsanordnung bzw. durch den Motor 32 fließende Strom einen magnetischen Fluss erzeugt, der beispielsweise den Rotor antreibt.

Der Stator 176 ist beispielhaft auf einem Lagerrohr 184 angeordnet, und das Lagerrohr 184 trägt eine Lageranordnung 180, die in diesem Ausführungsbeispiel ein erstes Lager 181 und ein zweites Lager 182 umfasst und dazu ausgebildet ist, den Rotor 171 drehbar zu lagern.

Bevorzugt ist eine Feder 188 vorgesehen, um eine Verspannung der Lageranordnung zu bewirken.

Die Leiterplatte 36 ist im Motor 32 angeordnet, und sie ist bevorzugt auf dem Lagerrohr 184 angeordnet, sofern ein solches vorhanden ist.

Auf der Leiterplatte 36 sind der Rotorstellungssensor 43, der Mikroprozessor 30 und der Temperatursensor 22 vorgesehen.

Die Temperatur am Lager 181 ist mit T_L1 bezeichnet, die Temperatur am Lager 182 mit T_L2 und die Temperatur am Temperatursensor 22 mit T_S. Bei der Entwicklung können im Bereich der Lager 181, 182 zu Versuchszwecken Temperatursensoren vorgesehen werden, um die Temperaturen T_L1 und T_L2 in Abhängigkeit von der Temperatur T_S und der Drehzahl n des Motors 32 zu ermitteln, also eine Korrelation zwischen diesen Werten herzustellen. Durch die Verwendung der erfindungsgemäßen Anordnung zur Ermittlung eines Lebensdauer-Korrekturwerts können anschließend im Serienprodukt die Temperatursensoren an den Lagern 181, 182 entfallen, und trotzdem kann eine gute Abschätzung der Lebensdauer erfolgen.

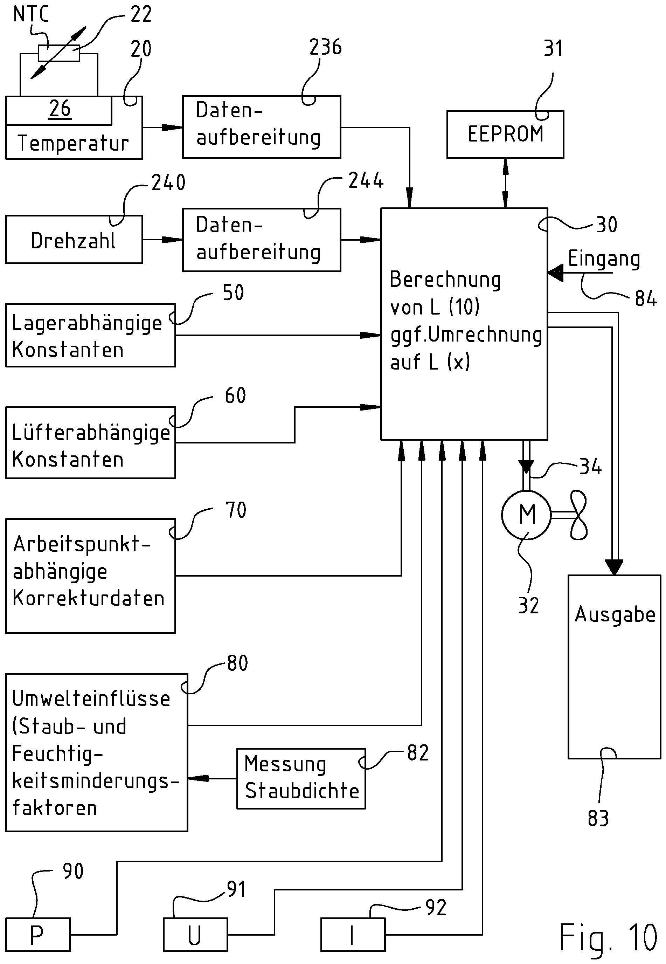

**Fig. 10** zeigt den Motor 32 mit dem $\mu$P 30 zur Ermittlung eines Werts für die voraussichtlich noch verfügbare Lebensdauer. Der Aufbau und die Funktionsweise entsprechen grundsätzlich dem Aufbau und der Funktionsweise von Fig. 1.

Zusätzlich sind aber eine Anordnung 90, eine Anordnung 91 und eine Anordnung 92 vorgesehen, die mit dem $\mu$P 30 verbunden sind.

Die Anordnung 90 ist mit P bezeichnet, und sie dient zur Erfassung eines Werts, welcher Wert die vom Motor 32 aufgenommene elektrische Leistung charakterisiert.

Die Anordnung 91 ist mit U bezeichnet, und sie dient zur Erfassung eines Werts, welcher Wert die dem Motor 32 zugeführte elektrische Spannung charakterisiert.

Die Anordnung 92 ist mit I bezeichnet, und sie dient zur Erfassung eines Werts, welcher Wert den durch den Motor 32 fließenden elektrischen Strom charakterisiert.

Die Ermittlung der Leistung P mittels einer Anordnung 90, die Ermittlung der dem Motor 32 zugeführten elektrischen Spannung U und die Ermittlung des durch den Motor 32 fließenden Stroms ist in der Offenlegungsschrift WO 2013/020689 A1 ausführlich beschrieben, und hierauf wird Bezug genommen.

Versuche haben ergeben, dass bei Motoren 32, bei denen ein Luftstrom durch den Motor 32 strömt, und bei denen - wie oben beschrieben - bei bestimmten Arbeitspunkten eine Umkehr des Luftstroms stattfindet, auf Grund der in diesen Arbeitspunkten schlechten Kühlung des Motors 32 eine extreme Temperaturerhöhung auftreten kann, wobei in Versuchen mit leistungsstarken Motoren 32 Temperaturerhöhungen gegenüber der Umgebungstemperatur von 40 K aufgetreten sind. Bei derartigen leistungsstarken Motoren mit einer Umkehr der durch den Motor 32 strömenden Luft hat es sich herausgestellt, dass eine Bestimmung des genauen Arbeitspunkts, bei dem diese Umkehr stattfindet, auf Basis der Temperatur und der Drehzahl schwierig ist. Der Arbeitspunkt des Lüfters lässt sich jedoch über die vom Lüfter aufgenommene elektrische Leistung deutlich besser bestimmen, und daher ist es bei Lüftern, die derartige Besonderheiten aufweisen, vorteilhaft, eine Anordnung 90 zur Erfassung der elektrischen Leistung und/oder die Anordnungen 91, 92 zur Erfassung der Spannung und des Stroms vorzusehen.

So kann beispielsweise bei der Vermessung des Lüfters im Labor die Temperatur am Sensor 22, die Temperatur am Lager, die Drehzahl n und entweder die elektrische Leistung oder aber die Spannung und der Strom gemessen werden, und es kann in Abhängigkeit hiervon bei den verschiedenen Betriebszuständen bzw. bei den verschiedenen Arbeitspunkten des Lüfters eine Korrelation zwischen der Temperatur am Lager und den übrigen gemessenen Werten berechnet bzw. ermittelt werden.

Versuche haben ergeben, dass sich bei bestimmten Motoren die Ermittlung des Lebensdauer-Korrekturwerts deutlich verbessern lässt, wohingegen bei anderen Motoren die Berücksichtigung der gemessenen Temperatur und der Drehzahl ausreichend ist.

Bei der Messung der Spannung U und des Stroms I kann als Zwischenschritt die Leistung P berechnet werden. Alternativ können auch die Werte U und I direkt zur Berechnung des Lebensdauer-Korrekturwerts verwendet werden.

Naturgemäß sind im Rahmen der vorliegenden Erfindung vielfache Abwandlungen und Modifikationen möglich.

Die Figuren und die Beschreibung zeigen einen elektronisch kommutierten Motor 32, welchem eine Leiterplatte 36 mit einem auf dieser angeordneten Temperatursensor 22 zur Erzeugung eines Temperatursignals zugeordnet ist, und mit einer ersten Anordnung zur fortlaufenden Überwachung bzw. Ermittlung der voraussichtlich noch verfügbaren Lebensdauer des Motors 32, welche erste Anordnung aufweist:

Eine zweite Anordnung 20, 236 zur Erfassung eines ersten Wertes, welcher abhängig ist vom Temperatursignal 33, und welcher die Temperatur T_S im Bereich der Leiterplatte 36 charakterisiert;
eine dritte Anordnung 240; 244 zur Erfassung eines zweiten Wertes, welcher die Drehzahl n des Motors 32 charakterisiert;
einen Speicher 31 zum Speichern eines digitalen dritten Wertes Cr für die voraussichtlich noch verfügbare Lebensdauer des Motors 32;
eine Rechenvorrichtung 30 und eine Ausgabevorrichtung 83 zur Ausgabe mindestens eines ersten Signals,
welche erste Anordnung dazu ausgebildet ist,

- in zeitlichen Abständen einen aktuellen Lebensdauer-Korrekturwert $\Delta$t zu erzeugen, der abhängig ist von dem erfassten ersten Wert für die Temperatur und dem erfassten zweiten Werte für die Drehzahl n,
- den augenblicklich gespeicherten dritten Wert für die voraussichtlich noch verfügbare Lebensdauer Cr abhängig vom berechneten aktuellen Lebensdauer-Korrekturwert $\Delta$t zu verändern,
- das Resultat als neuen augenblicklich gespeicherten dritten Wert für die noch verfügbare Lebensdauer Cr im Speicher zu speichern, und

- das erste Signal als Funktion des gespeicherten dritten Werts zu erzeugen und auszugeben.

Gemäß einer bevorzugten Ausführungsform weist der Motor ein Lager auf, und der aktuelle Lebensdauer-Korrekturwert $\Delta t$ wird derart erzeugt, dass der dritte Wert Cr für die voraussichtlich noch verfügbare Lebensdauer des Motors 32 näherungsweise der noch verfügbaren Lebensdauer des Lagers entspricht.

Gemäß einer bevorzugten Ausführungsform weist der Motor Kugellager auf. Dies hat den Vorteil, dass die temperaturabhängige Ermittlung des Lebensdauer-Korrekturwerts zu guten Ergebnissen führt.

Gemäß einer bevorzugten Ausführungsform ist die erste Anordnung dazu ausgebildet, den gespeicherten dritten Wert zu überwachen und zumindest dann das erste Signal zu erzeugen und auszugeben, wenn der gespeicherte dritte Wert einen vorgegebenen Grenzwert erreicht, welcher einem bevorstehenden Ablauf der voraussichtlich noch verfügbaren Lebensdauer Cr zugeordnet ist.

Gemäß einer bevorzugten Ausführungsform ist im Neuzustand des Motors bei der ersten Anordnung als dritter Wert für die verfügbare Lebensdauer ein Wert Cr_Start der erwarteten Lebensdauer bei vorgegebenen Betriebsbedingungen angenommen.

Gemäß einer bevorzugten Ausführungsform zeigt der dritte Wert mit fortschreitender Nutzung des Lüfters eine immer geringere Lebensdauer an, und eine Erhöhung der angezeigten Lebensdauer ist ausgeschlossen. Hierdurch wird der immer auftretende Verschleiß berücksichtigt.

Gemäß einer bevorzugten Ausführungsform ist der Motor dazu ausgebildet, die Kommutierung im Betrieb durch einen Mikroprozessor 30 zu steuern.

Gemäß einer bevorzugten Ausführungsform dient der Mikroprozessor 30 auch als Rechenvorrichtung für Berechnungen, die bei der Ermittlung der voraussichtlich noch verfügbaren Lebensdauer Cr und des Lebensdauer-Korrekturwerts $\Delta t$ anfallen.

Gemäß einer bevorzugten Ausführungsform ist der Mikroprozessor 30 auf der Leiterplatte 36 mit dem Temperatursensor 22, 22' angeordnet.

Gemäß einer bevorzugten Ausführungsform ist mindestens ein Teil der digitalen Werte im nichtflüchtigen Speicher 31 mehrfach gespeichert ist, um eine größere Sicherheit vor Datenverlust zu erreichen.

Gemäß einer bevorzugten Ausführungsform ist die Rechenvorrichtung 30 zum Erzeugen eines Alarmsignals ausgebildet, wenn der berechnete dritte Wert der voraussichtlichen Lebensdauer einen vorgegebenen Grenzwert überschreitet oder unterschreitet.

Gemäß einer bevorzugten Ausführungsform ist die erste Anordnung dazu ausgebildet, den Lebensdauer-Korrekturwert $\Delta t$ in regelmäßigen zeitlichen Abständen T zu erzeugen.

Gemäß einer bevorzugten Ausführungsform ist die erste Anordnung dazu ausgebildet, den Lebensdauer-Korrekturwert $\Delta t$ weniger als 100 mal pro Stunde zu erzeugen.

Gemäß einer bevorzugten Ausführungsform ist die Rechenvorrichtung 30 dazu ausgebildet, in Abhängigkeit vom dritten Wert Cr für die voraussichtlich noch verfügbare Lebensdauer des Elektromotors 32 ein Lebensdauer-Signal über die Ausgabevorrichtung 83 auszugeben, welches den dritten Wert Cr charakterisiert.

Gemäß einer bevorzugten Ausführungsform wird das Lebensdauer-Signal in Form eines PWM-Signals ausgegeben, dessen Tastverhältnis pwm abhängig vom dritten Wert Cr ist.

Gemäß einer bevorzugten Ausführungsform ist der Motor dazu ausgebildet ist, über die Ausgabevorrichtung 83 entweder ein Alarmsignal oder ein Lebensdauer-Signal auszugeben, wobei das Alarmsignal anzeigt, dass der berechnete dritte Wert der voraussichtlichen Lebensdauer einen vorgegebenen Grenzwert überschreitet oder unterschreitet,
bei welchem der Rechenvorrichtung 30 über eine Leitung 84 ein Solldrehzahlsignal zur Vorgabe einer Solldrehzahl zuführbar ist, und bei welchem bei einem vorgegebenen zeitlichen Verlauf des Solldrehzahlsignals ein Wechsel der Ausgabe des Lebensdauer-Signals zur Ausgabe des Alarmsignals oder umgekehrt stattfindet.

Gemäß einer bevorzugten Ausführungsform ist das Drehzahlsignal ein PWM-Signal.

Gemäß einer bevorzugten Ausführungsform ist der Motor dazu ausgebildet, über die Ausgabevorrichtung 83 entweder ein Istdrehzahlsignal oder ein Lebensdauer-Signal auszugeben, wobei das Istdrehzahlsignal anzeigt, wie hoch die aktuelle Drehzahl des Elektromotors ist, und der Rechenvorrichtung 30 ist über eine Leitung 84 ein Solldrehzahlsignal zur Vorgabe einer Solldrehzahl zuführbar, und bei einem vorgegebenen zeitlichen Verlauf des Solldrehzahlsignals findet ein Wechsel der Ausgabe des Lebensdauer-Signals zur Ausgabe des Istdrehzahlsignals oder umgekehrt statt.

Gemäß einer bevorzugten Ausführungsform ermöglicht die Ausgabevorrichtung 83 eine nicht drahtgebundene Ausgabe des Lebensdauer-Signals.

Gemäß einer bevorzugten Ausführungsform weist die erste Anordnung eine Vorrichtung 82 zur Messung eines die Staubdichte charakterisierenden Werts auf, und bei welchem die Erzeugung des aktuellen Lebensdauer-Korrekturwert $\Delta t$ auch abhängig ist von dem die Staubdichte charakterisierenden Wert.

Gemäß einer bevorzugten Ausführungsform weist die erste Anordnung eine Vorrichtung 80 zur Messung eines die Feuchtigkeit in der Umgebung des Lüfters 30 charakterisierenden Werts auf, und die Erzeugung des aktuellen Lebensdauer-Korrekturwert Δt ist auch abhängig von dem die Feuchtigkeit charakterisierenden Wert.

Gemäß einer bevorzugten Ausführungsform ist die erste Anordnung dazu ausgebildet, das erste Signal als digitales Signal mit einem Wertvorrat zu erzeugen, der einen ersten Signalwert (High bzw. Low) und einen zweiten Signalwert (Low bzw. High) umfasst, wobei die Frequenz des ersten Signals proportional zur Drehzahl des Elektromotors ist, und wobei das Verhältnis der Zeitdauer, in der das erste Signal den ersten Signalwert hat, zur Zeitdauer, in der das erste Signal den zweiten Signalwert hat, eine Funktion des dritten Werts ist.

Gemäß einer bevorzugten Ausführungsform weist die erste Anordnung einen ersten Zustand auf, in dem kein Fehler des Elektromotors festgestellt wurde, und die Anordnung weist einen zweiten Zustand auf, in dem ein Fehler des Elektromotors festgestellt wurde, und die erste Anordnung ist dazu ausgebildet, das erste Signal als digitales Signal mit einem Wertvorrat zu erzeugen, der einen ersten Signalwert (High bzw. Low) und einen zweiten Signalwert (Low bzw. High) umfasst, wobei in dem ersten Zustand der ersten Anordnung das erste Signal mit einer festen Frequenz ausgegeben wird, wobei das Verhältnis der Zeitdauer, in der das erste Signal den ersten Signalwert hat, zur Zeitdauer, in der das erste Signal den zweiten Signalwert hat, eine Funktion des dritten Werts ist, und wobei in dem zweiten Zustand der ersten Anordnung das erste Signal nur den ersten Signalwert aufweist.

Gemäß einer bevorzugten Ausführungsform ist der Speicher ein nichtflüchtiger Speicher 31.

Gemäß einer bevorzugten Ausführungsform weist die erste Anordnung eine vierte Anordnung 90 zur Erfassung eines vierten Werts auf, welcher vierte Wert die vom Motor 32 aufgenommene elektrische Leistung charakterisiert, wobei die erste Anordnung dazu ausgebildet ist, den aktuellen Lebensdauer-Korrekturwert Δt in Abhängigkeit von dem erfassten ersten Wert für die Temperatur, dem erfassten zweiten Wert für die Drehzahl n und dem vierten Wert zu erzeugen.

Gemäß einer bevorzugten Ausführungsform weist die erste Anordnung eine fünfte Anordnung 91 zur Erfassung eines fünften Werts auf, welcher fünfte Wert die dem Motor 32 zugeführte elektrische Spannung charakterisiert, bei welchem die erste Anordnung eine sechste Anordnung 92 zur Erfassung eines sechsten Werts aufweist, welcher sechste Wert den durch den Motor 32 fließenden elektrischen Strom charakterisiert, wobei die erste Anordnung dazu ausgebildet ist, den aktuellen Lebensdauer-Korrekturwert Δt in Abhängigkeit von dem erfassten ersten Wert für die Temperatur, dem erfassten zweiten Wert für die Drehzahl n, dem fünften Wert und dem sechsten Wert zu erzeugen.

**Patentansprüche**

1. Elektronisch kommutierter Motor (32), welchem eine Leiterplatte (36) mit einem auf dieser angeordneten Temperatursensor zur Erzeugung eines Temperatursignals (33) zugeordnet ist, mit einer ersten Anordnung zur fortlaufenden Ermittlung der voraussichtlich noch verfügbaren Lebensdauer des Motors (32), welche erste Anordnung aufweist:

   eine zweite Anordnung (20, 236) zur Erfassung eines ersten Wertes, welcher abhängig ist vom Temperatursignal (33), und welcher die Temperatur (T_S) im Bereich der Leiterplatte (36) charakterisiert;
   eine dritte Anordnung (240; 244) zur Erfassung eines zweiten Wertes, welcher die Drehzahl (n) des Motors (32) charakterisiert;
   einen Speicher (31) zum Speichern eines digitalen dritten Wertes (Cr) für die voraussichtlich noch verfügbare Lebensdauer des Motors (32);
   eine Rechenvorrichtung (30) und eine Ausgabevorrichtung (83) zur Ausgabe mindestens eines ersten Signals, welche erste Anordnung dazu ausgebildet ist,

   in zeitlichen Abständen einen aktuellen Lebensdauer-Korrekturwert (Δt) zu erzeugen, der abhängig ist von dem erfassten ersten Wert für die Temperatur und dem erfassten zweiten Wert für die Drehzahl (n),
   den augenblicklich gespeicherten dritten Wert für die voraussichtlich noch verfügbare Lebensdauer (Cr) abhängig vom berechneten aktuellen Lebensdauer-Korrekturwert (Δt) zu verändern,
   das Resultat als neuen augenblicklich gespeicherten dritten Wert für die noch verfügbare Lebensdauer (Cr) im Speicher zu speichern, und
   das erste Signal als Funktion des gespeicherten dritten Werts zu erzeugen und auszugeben, und wobei der Motor dazu ausgebildet ist, die Kommutierung im Betrieb durch einen Mikroprozessor (30) zu steuern, und bei welchem der Mikroprozessor (30) auch als Rechenvorrichtung für Berechnungen dient, die bei der Ermittlung der voraussichtlich noch verfügbaren Lebensdauer (Cr) und des Lebensdauer-Korrekturwerts (Δt) anfallen, wobei der Mikroprozessor (30) auf der Leiterplatte (36) mit dem Temperatursensor (22, 22') angeordnet ist.

2. Motor nach Anspruch 1, bei welchem die erste Anordnung dazu ausgebildet ist, den gespeicherten dritten Wert zu überwachen und zumindest dann das erste Signal zu erzeugen und auszugeben, wenn der gespeicherte dritte Wert einen vorgegebenen Grenzwert erreicht, welcher einem bevorstehenden Ablauf der voraussichtlich noch verfügbaren Lebensdauer (Cr) zugeordnet ist.

3. Motor nach einem der vorhergehenden Ansprüche, bei welchem die Rechenvorrichtung (30) zum Erzeugen eines Alarmsignals ausgebildet ist, wenn der berechnete dritte Wert der voraussichtlichen Lebensdauer einen vorgegebenen Grenzwert überschreitet oder unterschreitet.

4. Motor nach einem der vorhergehenden Ansprüche, bei welchem die erste Anordnung dazu ausgebildet ist, den Lebensdauer-Korrekturwert ($\Delta t$) in regelmäßigen zeitlichen Abständen (T) zu erzeugen.

5. Motor nach einem der vorhergehenden Ansprüche, bei welchem die Rechenvorrichtung (30) dazu ausgebildet ist, in Abhängigkeit vom dritten Wert (Cr) für die voraussichtlich noch verfügbare Lebensdauer des Elektromotors (32) ein Lebensdauer-Signal über die Ausgabevorrichtung (83) auszugeben, welches den dritten Wert (Cr) charakterisiert.

6. Motor nach Anspruch 5, bei welchem das Lebensdauer-Signal in Form eines PWM-Signals ausgegeben wird, dessen Tastverhältnis (pwm) abhängig vom dritten Wert (Cr) ist.

7. Motor nach Anspruch 5 oder 6, welcher dazu ausgebildet ist, über die Ausgabevorrichtung (83) entweder ein Alarmsignal oder ein Lebensdauer-Signal auszugeben, wobei das Alarmsignal anzeigt, dass der berechnete dritte Wert der voraussichtlichen Lebensdauer einen vorgegebenen Grenzwert überschreitet oder unterschreitet, bei welchem der Rechenvorrichtung (30) über eine Leitung (84) ein Solldrehzahlsignal zur Vorgabe einer Solldrehzahl zuführbar ist, und bei welchem bei einem vorgegebenen zeitlichen Verlauf des Solldrehzahlsignals ein Wechsel der Ausgabe des Lebensdauer-Signals zur Ausgabe des Alarmsignals oder umgekehrt stattfindet.

8. Motor nach einem der Ansprüche 5 bis 7, welcher dazu ausgebildet ist, über die Ausgabevorrichtung (83) entweder ein Istdrehzahlsignal oder ein Lebensdauer-Signal auszugeben, wobei das Istdrehzahlsignal anzeigt, wie hoch die aktuelle Drehzahl des Elektromotors ist, bei welchem der Rechenvorrichtung (30) über eine Leitung (84) ein Solldrehzahlsignal zur Vorgabe einer Solldrehzahl zuführbar ist, und bei welchem bei einem vorgegebenen zeitlichen Verlauf des Solldrehzahlsignals ein Wechsel der Ausgabe des Lebensdauer-Signals zur Ausgabe des Istdrehzahlsignals oder umgekehrt stattfindet.

9. Motor nach einem der vorhergehenden Ansprüche, bei welchem die Ausgabevorrichtung (83) eine nicht drahtgebundene Ausgabe des Lebensdauer-Signals ermöglicht.

10. Motor nach einem der vorhergehenden Ansprüche, bei welchem die erste Anordnung eine Vorrichtung (82) zur Messung eines die Staubdichte charakterisierenden Werts aufweist, und bei welchem die Erzeugung des aktuellen Lebensdauer-Korrekturwert ($\Delta t$) auch abhängig ist von dem die Staubdichte charakterisierenden Wert.

11. Motor nach einem der vorhergehenden Ansprüche, bei welchem die erste Anordnung eine Vorrichtung (80) zur Messung eines die Feuchtigkeit in der Umgebung des Lüfters (30) charakterisierenden Werts aufweist, und bei welchem die Erzeugung des aktuellen Lebensdauer-Korrekturwert ($\Delta t$) auch abhängig ist von dem die Feuchtigkeit charakterisierenden Wert.

12. Motor nach einem der vorhergehenden Ansprüche, bei welchem die erste Anordnung dazu ausgebildet ist, das erste Signal als digitales Signal mit einem Wertvorrat zu erzeugen, der einen ersten Signalwert (High bzw. Low) und einen zweiten Signalwert (Low bzw. High) umfasst, wobei die Frequenz des ersten Signals proportional zur Drehzahl des Elektromotors ist, und wobei das Verhältnis der Zeitdauer, in der das erste Signal den ersten Signalwert hat, zur Zeitdauer, in der das erste Signal den zweiten Signalwert hat, eine Funktion des dritten Werts ist.

13. Motor nach einem der vorhergehenden Ansprüche, bei welchem die erste Anordnung einen ersten Zustand aufweist, in dem kein Fehler des Elektromotors festgestellt wurde, und welche einen zweiten Zustand aufweist, in dem ein Fehler des Elektromotors festgestellt wurde, und welche erste Anordnung dazu ausgebildet ist, das erste Signal als digitales Signal mit einem Wertvorrat zu erzeugen, der einen ersten Signalwert (High bzw. Low) und einen zweiten Signalwert (Low bzw. High) umfasst, wobei in dem ersten Zustand der ersten Anordnung das erste Signal mit einer festen Frequenz ausgegeben wird, wobei das Verhältnis der Zeitdauer, in der das erste Signal den ersten Signalwert hat, zur Zeitdauer, in der das erste Signal den zweiten Signalwert hat, eine Funktion des dritten Werts ist, und wobei in dem zweiten Zustand der ersten Anordnung das erste Signal nur den ersten Signalwert aufweist.

14. Motor nach einem der vorhergehenden Ansprüche,
bei welchem die erste Anordnung eine vierte Anordnung (90) zur Erfassung eines vierten Werts aufweist, welcher vierte Wert die vom Motor (32) aufgenommene elektrische Leistung charakterisiert,
wobei die erste Anordnung dazu ausgebildet ist, den aktuellen Lebensdauer-Korrekturwert ($\Delta t$) in Abhängigkeit von dem erfassten ersten Wert für die Temperatur, dem erfassten zweiten Wert für die Drehzahl (n) und dem vierten Wert zu erzeugen.

15. Motor nach einem der vorhergehenden Ansprüche,
bei welchem die erste Anordnung eine fünfte Anordnung (91) zur Erfassung eines fünften Werts aufweist, welcher fünfte Wert die dem Motor (32) zugeführte elektrische Spannung charakterisiert,
bei welchem die erste Anordnung eine sechste Anordnung (92) zur Erfassung eines sechsten Werts aufweist, welcher sechste Wert den durch den Motor (32) fließenden elektrischen Strom charakterisiert,
wobei die erste Anordnung dazu ausgebildet ist, den aktuellen Lebensdauer-Korrekturwert ($\Delta t$) in Abhängigkeit von dem erfassten ersten Wert für die Temperatur, dem erfassten zweiten Wert für die Drehzahl (n), dem fünften Wert und dem sechsten Wert zu erzeugen.

**Claims**

1. Electronically commutated motor (32) to which a printed circuit board (36) having a temperature sensor for generating a temperature signal arranged thereon is assigned,
having a first arrangement for continuously determining the expected remaining available lifetime of the motor (32), said first arrangement comprising:

a second arrangement (20, 236) for detecting a first value which is dependent on the temperature signal (33) and which characterizes the temperature (T_S) in the region of the printed circuit board (36);
a third arrangement (240; 244) for detecting a second value which characterizes the rotational speed (n) of the motor (32);
a memory (31) for storing a digital third value (Cr) for the expected remaining lifetime of the motor (32);
a computing device (30) and an output device (83) for outputting at least one first signal,
said first arrangement is formed to
generate a current lifetime correction value ($\Delta t$) at intervals, which depends on the first value detected for the temperature and the second value detected for the rotational speed (n),
change the currently stored third value for the expected remaining lifetime (Cr) depending on the calculated current lifetime correction value ($\Delta t$) store the result in the memory as a new currently stored third value for the remaining lifetime (Cr), and
generate and output the first signal as a function of the stored third value, and wherein
the motor is formed to control the commutation in operation by a microprocessor (30), and in which the microprocessor (30) also serves as a computing device for calculations which occur in determining the expected remaining lifetime (Cr) and the lifetime correction value ($\Delta t$), wherein the microprocessor (30) is arranged on the printed circuit board (36) with the temperature sensor (22, 22').

2. Motor according to claim 1, in which the first arrangement is formed to monitor the stored third value and to generate and output the first signal at least when the stored third value reaches a predetermined limit value which is associated with an imminent expiry of the expected remaining lifetime (Cr).

3. Motor according to one of the preceding claims, in which the computing device (30) is formed to generate an alarm signal if the calculated third value of the expected lifetime exceeds or falls below a predetermined limit value.

4. Motor according to one of the preceding claims, in which the first arrangement is formed to generate the lifetime correction value ($\Delta t$) at regular time intervals (T).

5. Motor according to one of the preceding claims, in which the computing device (30) is formed to output a lifetime signal via the output device (83), which characterizes the third value (Cr), depending on the third value (Cr) for the expected remaining lifetime of the electric motor (32).

6. Motor according to claim 5, in which the lifetime signal is output in the form of a PWM signal whose duty cycle (pwm) is depending on the third value (Cr).

7. Motor according to claim 5 or 6, which is formed to output either an alarm signal or a lifetime signal via the output device (83), wherein the alarm signal indicates that the calculated third value of the expected lifetime exceeds or falls below a predetermined limit value,
in which a target rotational speed signal for predetermining a target rotational speed is feedable to the computing device (30) via a line (84), and in which, in the event of a predetermined time characteristic of the target rotational speed signal, a change in the output of the lifetime signal takes place for the output of the alarm signal or vice versa.

8. Motor according to any one of the claims 5 to 7, which is formed to output either an actual rotational speed signal or a lifetime signal via the output device (83), wherein the actual rotational speed signal indicates how high the actual rotational speed of the electric motor is,
in which a target rotational speed signal for predetermining a target rotational speed is feedable to the computing device (30) via a line (84), and in which, in the event of a predetermined time characteristic of the target rotational speed signal, a change in the output of the lifetime signal takes place for the output of the actual rotational speed signal or vice versa.

9. Motor according to one of the preceding claims, in which the output device (83) enables a non-wired output of the lifetime signal.

10. Motor according to one of the preceding claims, in which the first arrangement comprises a device (82) for measuring a value characterizing the dust density, and in which the generation of the current lifetime correction value ($\Delta t$) is also dependent on the value characterizing the dust density.

11. Motor according to one of the preceding claims, in which the first arrangement comprises a device (80) for measuring a value characterizing the humidity in the environment of the fan (30), and in which the generation of the current lifetime correction value ($\Delta t$) is also dependent on the value characterizing the humidity.

12. Motor according to one of the preceding claims, in which the first arrangement is formed to generate the first signal as a digital signal with a set of values comprising a first signal value (high respectively low) and a second signal value (low respectively high),
wherein the frequency of the first signal is proportional to the rotational speed of the electric motor,
and wherein the ratio of the time period in which the first signal has the first signal value to the time period in which the first signal has the second signal value is a function of the third value.

13. Motor according to one of the preceding claims,
in which the first arrangement has a first state in which no fault of the electric motor has been detected and which has a second state in which a fault of the electric motor has been detected, and which first arrangement is formed to generate the first signal as a digital signal with a set of values comprising a first signal value (high respectively low) and a second signal value (low respectively high),
wherein in the first state of the first arrangement the first signal is output at a fixed frequency, wherein the ratio of the time period in which the first signal has the first signal value to the time period in which the first signal has the second signal value is a function of the third value, and wherein in the second state of the first arrangement the first signal has only the first signal value.

14. Motor according to one of the preceding claims,
in which the first arrangement comprises a fourth arrangement (90) for detecting a fourth value, said fourth value characterizing the electrical power consumed by the motor (32),
wherein the first arrangement is adapted to generate the current lifetime correction value ($\Delta t$) as a function of the detected first value for the temperature, the detected second value for the rotational speed (n) and the fourth value.

15. Motor according to one of the preceding claims,
in which the first arrangement comprises a fifth arrangement (91) for detecting a fifth value, said fifth value characterizing the electrical voltage supplied to the motor (32),
in which the first arrangement comprises a sixth arrangement (92) for detecting a sixth value, said sixth value characterizing the electric current flowing through the motor (32),
wherein the first arrangement is adapted to generate the current lifetime correction value ($\Delta t$) in dependence on the determined first value for the temperature, the determined second value for the rotational speed (n), the fifth value and the sixth value.

**Revendications**

1. Moteur (32) à commutation électronique, auquel est associé un circuit imprimé (36) avec un capteur de température agencé sur celui-ci pour la génération d'un signal de température (33),
avec un premier agencement pour la détermination continue de la durée de vie probablement encore disponible du moteur (32),
lequel premier agencement présente :

un deuxième agencement (20, 236) pour la détection d'une première valeur, laquelle dépend du signal de température (33), et laquelle caractérise la température (T_S) dans la zone du circuit imprimé (36) ;
un troisième agencement (240 ; 244) pour la détection d'une deuxième valeur, laquelle caractérise la vitesse de rotation (n) du moteur (32) ;
une mémoire (31) pour le stockage d'une troisième valeur (Cr) numérique pour la durée de vie probablement encore disponible du moteur (32) ;
un dispositif de calcul (30) et un dispositif d'émission (83) pour l'émission d'au moins un premier signal,
lequel premier agencement est réalisé
pour générer à des intervalles de temps une valeur de correction de durée de vie ($\Delta t$) actuelle, qui dépend de la première valeur détectée pour la température et de la deuxième valeur détectée pour la vitesse de rotation (n),
pour modifier la troisième valeur stockée instantanément pour la durée de vie probablement encore disponible (Cr) en fonction de la valeur de correction de durée de vie ($\Delta t$) actuelle calculée,
pour stocker le résultat en tant que nouvelle troisième valeur stockée instantanément pour la durée de vie encore disponible (Cr) dans la mémoire, et
pour générer et émettre le premier signal en fonction de la troisième valeur stockée, et dans lequel le moteur est réalisé pour commander la commutation en fonctionnement par un microprocesseur (30), et dans lequel le microprocesseur (30) sert aussi de dispositif de calcul pour des calculs, qui s'appliquent lors de la détermination de la durée de vie probablement encore disponible (Cr) et de la valeur de correction de durée de vie ($\Delta t$), dans lequel le microprocesseur (30) est agencé sur le circuit imprimé (36) avec le capteur de température (22, 22').

2. Moteur selon la revendication 1, dans lequel le premier agencement est réalisé pour surveiller la troisième valeur stockée et générer et émettre le premier signal au moins lorsque la troisième valeur stockée atteint une valeur limite prédéfinie, laquelle est associée à une expiration prochaine de la durée de vie probablement encore disponible (Cr).

3. Moteur selon l'une quelconque des revendications précédentes, dans lequel le dispositif de calcul (30) est réalisé pour la génération d'un signal d'alarme, lorsque la troisième valeur calculée de la durée de vie prévisionnelle dépasse ou passe en dessous d'une valeur limite prédéfinie.

4. Moteur selon l'une quelconque des revendications précédentes, dans lequel le premier agencement est réalisé pour générer la valeur de correction de durée de vie ($\Delta t$) à des intervalles de temps (T) réguliers.

5. Moteur selon l'une quelconque des revendications précédentes, dans lequel le dispositif de calcul (30) est réalisé pour émettre en fonction de la troisième valeur (Cr) pour la durée de vie probablement encore disponible du moteur électrique (32) un signal de durée de vie par le biais du dispositif d'émission (83), lequel caractérise la troisième valeur (Cr)

6. Moteur selon la revendication 5, dans lequel le signal de durée de vie est émis sous la forme d'un signal PWM, dont le rapport cyclique (pwm) dépend de la troisième valeur (Cr).

7. Moteur selon la revendication 5 ou 6, lequel est réalisé pour émettre par le biais du dispositif d'émission (83) soit un signal d'alarme soit un signal de durée de vie, dans lequel le signal d'alarme indique que la troisième valeur calculée de la durée de vie prévisionnelle dépasse ou passe en dessous d'une valeur limite prédéfinie,
dans lequel un signal de vitesse de rotation de consigne peut être amené au dispositif de calcul (30) par le biais d'une ligne (84) pour la prescription d'une vitesse de rotation de consigne, et dans lequel lors d'un déroulement temporel prédéfini du signal de vitesse de rotation de consigne, un changement de l'émission du signal de durée de vie pour l'émission du signal d'alarme ou inversement a lieu.

8. Moteur selon l'une quelconque des revendications 5 à 7, lequel est réalisé pour émettre par le biais du dispositif d'émission (83) soit un signal de vitesse de rotation réelle soit un signal de durée de vie, dans lequel le signal de vitesse de rotation réelle indique le niveau de la vitesse de rotation actuelle du moteur électrique, dans lequel un signal de vitesse de rotation de consigne peut être amené au dispositif de calcul (30) par le biais d'une ligne (84) pour la prescription d'une vitesse de rotation de consigne, et dans lequel lors d'un déroulement temporel prédéfini du signal de vitesse de rotation de consigne, un changement de l'émission du signal de durée de vie pour l'émission du signal de vitesse de rotation réelle ou inversement a lieu.

9. Moteur selon l'une quelconque des revendications précédentes, dans lequel le dispositif d'émission (83) permet une émission non filaire du signal de durée de vie.

10. Moteur selon l'une quelconque des revendications précédentes, dans lequel le premier agencement présente un dispositif (82) pour la mesure d'une valeur caractérisant la densité de poussière, et dans lequel la génération de la valeur de correction de durée de vie ($\Delta t$) actuelle dépend aussi de la valeur caractérisant la densité de poussière.

11. Moteur selon l'une quelconque des revendications précédentes, dans lequel le premier agencement présente un dispositif (80) pour la mesure d'une valeur caractérisant l'humidité dans l'environnement du ventilateur (30), et dans lequel la génération de la valeur de correction de durée de vie ($\Delta t$) actuelle dépend aussi de la valeur caractérisant l'humidité.

12. Moteur selon l'une quelconque des revendications précédentes, dans lequel le premier agencement est réalisé pour générer le premier signal en tant que signal numérique avec une réserve de valeur, qui comprend une première valeur de signal (High ou Low) et une deuxième valeur de signal (Low ou High), dans lequel la fréquence du premier signal est proportionnelle à la vitesse de rotation du moteur électrique, et dans lequel le rapport de la durée de temps, pendant laquelle le premier signal a la première valeur de signal, par rapport à la durée de temps, pendant laquelle le premier signal a la deuxième valeur de signal, est une fonction de la troisième valeur.

13. Moteur selon l'une quelconque des revendications précédentes, dans lequel le premier agencement présente un premier état, dans lequel aucune erreur du moteur électrique n'a été constatée, et lequel présente un deuxième état, dans lequel une erreur du moteur électrique a été constatée, et lequel premier agencement est réalisé pour générer le premier signal en tant que signal numérique avec une réserve de valeur, qui comprend une première valeur de signal (High ou Low) et une deuxième valeur de signal (Low ou High), dans lequel dans le premier état du premier agencement, le premier signal est émis avec une fréquence fixe, dans lequel le rapport de la durée de temps, pendant laquelle le premier signal a la première valeur de signal, par rapport à la durée de temps, pendant laquelle le premier signal a la deuxième valeur de signal, est une fonction de la troisième valeur, et dans lequel dans le deuxième état du premier agencement, le premier signal présente seulement la première valeur de signal.

14. Moteur selon l'une quelconque des revendications précédentes, dans lequel le premier agencement présente un quatrième agencement (90) pour la détection d'une quatrième valeur, laquelle quatrième valeur caractérise la puissance électrique reçue par le moteur (32), dans lequel le premier agencement est réalisé pour générer la valeur de correction de durée de vie ($\Delta t$) actuelle en fonction de la première valeur détectée pour la température, de la deuxième valeur détectée pour la vitesse de rotation (n) et de la quatrième valeur.

15. Moteur selon l'une quelconque des revendications précédentes, dans lequel le premier agencement présente un cinquième agencement (91) pour la détection d'une cinquième valeur, laquelle cinquième valeur caractérise la tension électrique amenée au moteur (32). dans lequel le premier agencement présente un sixième agencement (92) pour la détection d'une sixième valeur, laquelle sixième valeur caractérise le courant électrique traversant le moteur (32), dans lequel le premier agencement est réalisé pour générer la valeur de correction de durée de vie ($\Delta t$) actuelle en fonction de la première valeur détectée pour la température, de la deuxième valeur détectée pour la vitesse de rotation (n), de la cinquième valeur et de la sixième valeur.

Fig. 1

Fig. 2

Fig. 3

S102

Berechne $\Delta t\_n+1$

S104

Lese EEPROM Wert $Cr\_n$

S106

Subtrahiere $\Delta t\_n+1$ von $Cr\_n$

S108

Speichere neuen EEPROM Wert $Cr\_n+1$

S110        S112

$Cr\_n+1$ < Alarmwert ?        Ja        Alarm

Nein

Motor weiter-laufen lassen

S114

Fig. 4

Fig. 5

Fig. 6

Fig.7A

Fig.7B

Fig.7C

Fig.7D

Fig. 7

Fig. 8A

Fig. 8B

Fig. 8C

Fig. 8D

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2458469 A1
- EP 1286456 A1
- EP 1049050 A2
- US 2009249128 A1
- WO 2012130405 A1
- WO 2013020689 A1